# EUROPÄISCHE PATENTSCHRIFT

(11) **EP 3 931 234 B1**
(45) Veröffentlichungstag und Bekanntmachung des Hinweises auf die Patenterteilung: **15.10.2025**
(21) Anmeldenummer: 20705988.2
(22) Anmeldetag: 24.02.2020
(51) Int. Cl.: C08G 18/73, C08G 18/79, C09D 11/322, C09D 11/02, C09D 11/36, C08K 3/013, C09D 175/04

(54) **LAGERSTABILE PIGMENTIERTE ISOCYANATGRUPPEN-HALTIGE FORMULIERUNGEN MIT ISOCYANATGRUPPEN-HALTIGEM ANREIBEHARZ UND DEREN VERWENDUNG**
STORAGE STABLE PIGMENTED ISOCYANATE GROUP-CONTAINING FORMULATIONS COMPRISING ISOCYANATE GROUP-CONTAINING RUBBING RESIN AND THEIR USE
FORMULATIONS CONTENANT DES GROUPES ISOCYANATES, PIGMENTÉES, STABLES AU STOCKAGE AVEC UNE RÉSINE BROYÉE CONTENANT DES GROUPES ISOCYANATES ET LEUR UTILISATION

(30) Priorität: 28.02.2019 EP 19159968
(43) Veröffentlichungstag der Anmeldung: 05.01.2022
(73) Patentinhaber: Covestro Deutschland AG, 51373 Leverkusen (DE)
(72) Erfinder: TILLACK, Jörg, 42699 Solingen (DE); ACHTEN, Dirk, 51375 Leverkusen (DE); WEBER, Achim, 73776 Altbach (DE); SCHUSTER, Fabian, 51375 Leverkusen (DE)
(74) Vertreter: Levpat
(86) Internationale Anmeldenummer: PCT/EP2020/054718
(87) Internationale Veröffentlichungsnummer: WO 2020/173846

(56) Entgegenhaltungen:
- EP-A1- 2 578 646
- DE-A1- 19 858 817
- DE-T2- 60 029 067
- US-A1- 2006 014 857
- BYK ADDITIVES & INSTRUMENTS: "BYKJET-9131 - Technical Datasheet", 1 March 2014 (2014-03-01), XP093067591, Retrieved from the Internet <URL:https://www.byk.com/en/products/additives-by-name/bykjet-9131> [retrieved on 20230726]

## Beschreibung

Die Erfindung betrifft lagerstabile pigmentierte Isocyanatgruppen-haltige Formulierungen beinhaltend mindestens ein Pigment a., mindestens eine Isocyanatgruppen-haltige Komponente b., mindestens ein Netzmittel und/oder Dispergiermittel c., mindestens ein Isocyanatgruppen-haltiges Anreibeharz d. und gegebenenfalls Lösemittel e., wobei die Formulierung nach Lagerung bei 50 °C über einen Zeitraum von mindestens 3 Tagen einen Viskositätsanstieg von weniger als 500 % aufweist. Weiterhin betrifft die Erfindung die Verwendung solcher Formulierungen.

Pigmentierte Tintenformulierungen für den Einsatz in Digitaldruckapplikationen, enthaltend Polyurethane, sind seit langer Zeit bekannt. Diese Formulierungen sind überwiegend nicht reaktiv. Zum Einsatz kommen fein dispergierte Pigmente bzw. gelöste Farbstoffe in klassischen Lösemitteln, Wasser oder Öl. Zur Fixierung der Pigmente enthalten die Formulierungen häufig noch einen geringen Anteil an einem Bindemittel, in besonderen Fällen ist dieses Bindemittel ein Polyurethan. So wird z.B. in WO 11152353 die Modifikation eines Pigments mit Polyurethan beschrieben. Diese Modifikation führt zu besonders stabilen Drucken.

Auch die Behandlung von Pigmenten mit Isocyanaten ist in der Literatur bekannt. So wird in der US 3,156,576 aus dem Jahre 1964 bereits die Modifikation von Pigmenten wie Carbon Black, Silikat, Titandioxid und ähnlichen Verbindungen mit Isocyanaten beschrieben. Das trockene Pigment wird hier in eine trockene Toluol /TDI-Mischung mit einem TDI Gehalt von 10 % eingearbeitet und anschließend die überschüssige Flüssigkeit bei 75 °C verdampft. Das so modifizierte, trockene Pigment wird unmittelbar im Anschluss unter Ausschluss von Feuchtigkeit in ein Silikon eingearbeitet, welches dann ausgehärtet wird.

In der US 4,075,152 wird ein Verfahren beschrieben, wie man die Flokkulation von Pigmenten in 2K PU Lacken verhindern kann. Hierzu wird zunächst eine Isocyanat/Pigment Aufschlämmung hergestellt und im direkten Anschluss diese Aufschlämmung in ein Polyol gemischt. Die erhaltenen eingefärbten OH-funktionellen Polyurethanpasten zeigten keine Pigmentflokkulation.

In den angeführten Beispielen wird zwar benannt, dass die Vorbehandlung von Pigmenten mit Isocyanaten vorteilhaft sein kann, es ist hier aber keine Lehre zu entnehmen, wie man eine lagerstabile, pigmentierte, Isocyanatgruppen-haltige Formulierung herstellen kann.

In der US 6,341,856 wird die Herstellung einer reaktiven Tinte für den Digitaldruck beschrieben. Hier werden Verbindungen mit mindestens einer C-H-aktiven Gruppe, Verbindungen mit blockierten C-H-reaktiven Gruppen, welches die Reaktion des aktiven Wasserstoffs mit der C-H-reaktiven Gruppe verhindert, Emulgatoren und Pigmente oder Farbstoffe zu einer bei Raumtemperatur stabilen Inkjettinte verarbeitet. Als Reaktivkomponenten werden explizit auch Polyole und Isocyanate genannt.

DE 198 58 817 A1 offenbart wässrige reaktive 2-Komponenten-Bindemittelkombinationen für wässrige reaktive Spachtelmassen, Verfahren zur Herstellung von wässrigen reaktiven Spachtelmassen auf Basis von wässrigen reaktiven 2-Komponenten-Bindemittelkombinationen und die Verwendung solcher Spachtelmassen.

US 2006 014857 A1 betrifft einen wässrigen, farb-und/oder effektgebenden, von Rheologiehilfsmitteln auf der Basis von Schichtsilikaten freien Beschichtungsstoff, enthaltend (A) mindestens ein wasserlösliches, wasserverdünnbares und/oder wasserdispergierbares Polyurethan, ausgewählt aus der Gruppe, bestehend aus mit olefinisch ungesättigten Verbindungen gepfropften, ionisch oder ionisch und nichtionisch stabilisierten Polyurethanen auf Basis von Polyisocyanaten, ausgewählt aus der Gruppe, bestehend aus aliphatischen, cycloaliphatischen, aliphatisch- cycloaliphatischen, aromatischen, aliphatisch-aromatischen und cycloaliphatisch-aromatischen Polyisocyanaten; (B) mindestens ein farb- und/oder effektgebendes Pigment; (C) mindestens ein Dispergierhilfsmittel für die farb-und/oder effektgebenden Pigmente, ausgewählt aus der Gruppe, bestehend aus den Reaktionsprodukten von (c1) mindestens einem funktionalisierten Copolymerisat, enthaltend (c11) mindestens ein einpolymerisiertes olefinisch ungesättigtes Monomer, ausgewählt aus der Gruppe, bestehend aus olefinisch ungesättigten Monomeren, enthaltend mindestens eine reaktive funktionelle Gruppe, ausgewählt aus der Gruppe, bestehend aus Isocyanatgruppen, Anhydridgruppen und Epoxygruppen; und (c12) mindestens ein einpolymerisiertes olefinisch ungesättigtes Monomer, das frei von isocyanat-, anhydrid-und epoxyreaktiven funktionellen Gruppen ist; (c 2) mindestens einem homopolymeren Polyalkylenglykol und (c 3) mindestens einer Verbindung der allgemeinen Formel 1: NR₂-C(O)-NR₂ (1), worin die Variablen R aus der Gruppe, bestehend aus Wasserstoffatomen und organischen, gesättigten und ungesättigten, substituierten und unsubstituierten, aliphatischen, cycloaliphatischen, aliphatischcycloaliphatischen, aromatischen, aliphatisch-aromatischen und cycloaliphatisch-aromatischen Resten, die mindestens eine Aminogruppe -NH-, mindestens ein Sauerstoffatom -O- und/oder mindestens ein Schwefelatom -S- enthalten und/oder zyklisch miteinander verknüpft sein können, wobei mindestens ein organischer Rest R vorhanden ist und der Rest R oder mindestens einer der Reste R mindestens eine reaktive funktionelle Gruppe, ausgewählt aus der Gruppe, bestehend aus isocyanat-, anhydrid-und epoxyreaktiven Gruppen, enthält; ausgewählt werden; und (D) mindestens ein Rheologiehilfsmittel auf der Basis von (Meth)Acrylatcopolymerisaten.

DE 19858817 A1 offenbart wässrige reaktive Spachtelmassen.

US 2006/014857 A1 offenbart wässrige Chromophore und/oder Effekterzeugende Beschichtungsmaterialien.

EP 2578646 A1 offenbart Polyurethan Klebharzpigmente, Pigmentdispersionzusammensetzungen und inkjet Tintenzusammensetzungen.

DE 60029067 T2 offenbart Tintenstrahlverfahren mittels Reaktivfarbstoffe.

Die Blockierung der Isocyanatkomponente vor Mischung mit der Polyolkomponente kann entweder chemisch oder durch eine Verkapselung geschehen.

Nachteilig bei dieser Ausführungsform ist die Blockierung. Sie ist aufwendig und somit teuer. Zudem müssen die Isocyanatgruppen erst wieder, zum Beispiel durch erwärmen, deblockieren, damit diese für eine Reaktion zur Verfügung stehen.

Aufgabe war es daher, mindestens einen Nachteil des Standes der Technik zumindest zum Teil zu überwinden.

Eine weitere Aufgabe der Erfindung war es eine pigmenthaltige Formulierung bereitzustellen, die bei Ihrer Verarbeitung reaktive Isocyanatgruppen enthält. Diese können dann ohne aufwendige Deblockierung direkt nach der Applikation mit Reaktionspartnern reagieren.

Weiterhin war eine Aufgabe der Erfindung eine pigmenthaltige Formulierung bereitzustellen, die über einen möglichst langen Verarbeitungszeitraum, bevorzugt über mehrere Wochen oder bevorzugt über mehrere Monate reaktive Isocyanatgruppen aufweist.

Ebenfalls offenbart ist ein Verfahren , das es ermöglicht eine lagerstabile Isocyanatgruppen-haltige Formulierung zu generieren.

Eine weitere Aufgabe der Erfindung war es eine Isocyanatgruppen-haltige Formulierung als Farbpaste, bevorzugt als Tinte, insbesondere als Tinte für den Digitaldruck bereitzustellen.

Ein erster Gegenstand der Erfindung betrifft eine lagerstabile Isocyanatgruppen-haltige Formulierung beinhaltend die Komponenten:
a. 0,01 bis 45 Gew.-% mindestens eines Pigments,
b. 1 bis 98 Gew.-% mindestens einer Isocyanatgruppen-haltigen Komponente, die freie Isocyanatgruppen aufweist,
c. 0,01 bis 20 Gew.-% mindestens eines Netzmittels und/oder Dispergiermittels,
d. 0,1 bis 35 Gew.-% mindestens eines Isocyanatgruppen-haltigen Anreibeharzes enthaltend freie Isocyanatgruppen, und
e. 0 bis 80 Gew.-% Lösemittel,
   jeweils bezogen auf die Gesamtmenge der Formulierung, wobei die Summe aller Bestandteile der Formulierung 100 Gew.-% nicht übersteigt,
   dadurch gekennzeichnet, dass die Formulierung nach Lagerung bei 50 °C über einen Zeitraum von mindestens 3 Tagen einen Viskositätsanstieg von weniger als 500 % aufweist, bezogen auf die Ausgangs-Viskosität der Formulierung, die nach 1 Stunde nach Zusammenfügen sämtlicher gewünschter Komponenten, insbesondere der Komponenten a. bis e., ermittelt wird, wobei die Viskositätsbestimmung jeweils bei 20 °C bei einer Scherrate von 500 [l/s] vorgenommen wird, wobei das molare Verhältnis der Summe aller Isocyanatgruppen der Isocyanat-haltigen Formulierung zu der Summe aller isocyanatreaktiven Gruppen, die nicht Isocyanatgruppen sind, in der Formulierung mindestens 8:1 beträgt

und wobei das Isocyanatgruppen-haltige Anreibeharz d. eine Viskosität in einem Bereich von 100 bis 5 000 mPas aufweist
und wobei das Isocyanatgruppen-haltige Anreibeharz d. ausgewählt ist aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI), 2,4- und 2,6-Diisocyanatotoluol (TDI), 2,4'- und 4,4'-Diisocyanatodiphenylmethan (MDI) und 1,5-Diisocyanatonaphthalin, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'-und 4,4'-Diisocyanatodicyclohexylmethan (H12MDI), oder einer Mischung aus mindestens zwei hiervon sowie gegebenenfalls Oligomere und/oder Reaktionsprodukte hiervon.

Die Viskositätsbestimmung wird bevorzugt mit einem Physica MCR 301 (Anton Paar GmbH) mit einer Platte-Platte (Durchmesser 40 mm) Messgeometrie bei 20 °C Messtemperatur durchgeführt. Bevorzugt ist es, dass nach Lagerung bei 50 °C über einen Zeitraum von mindestens 3 Tagen, oder bevorzugt von mindestens 5 Tagen, oder bevorzugt von mindestens 7 Tagen, oder bevorzugt von mindestens 10 Tagen, oder bevorzugt von mindestens 14 Tagen einen Viskositätsanstieg von weniger als 500 %, bevorzugt von weniger als 300 %, oder bevorzugt von weniger als 200 %, oder bevorzugt von weniger als 100 %, oder bevorzugt von weniger als 50 % aufweist, bezogen auf die Ausgangs-Viskosität der Formulierung. Die Ausgangs-Viskosität wird gemäß der Erfindung definiert als die Viskosität nach 1 Stunde nach dem Zusammenfügen sämtlicher gewünschter Komponenten, insbesondere der ausgewählten Komponenten a. bis e..

Bevorzugt beträgt das molare Verhältnis der Summe aller Isocyanatgruppen der Isocyanat-haltigen Formulierung, insbesondere der Summe aller Isocyanatgruppen der Komponenten b. und d., zu der Summe aller isocyanatreaktiven Gruppen in der Isocyanat-haltigen Formulierung, die nicht Isocyanatgruppen sind, mindestens 11:1, oder bevorzugt mindestens 15:1, oder bevorzugt mindestens 20:1, oder bevorzugt mindestens 50:1, oder bevorzugt mindestens 100:1.

In einer bevorzugten Ausführungsform der Formulierung weist das Isocyanatgruppen-haltige Anreibeharz d. eine Viskosität auf, die in einem Bereich von 200 bis 2 000 mPas, besonders bevorzugt in einem Bereich von 350 bis 1 000 mPas liegt.

In einer bevorzugten Ausführungsform der Formulierung enthält die Formulierung
a. 0,1 bis 15 Gew.-%, oder bevorzugt 0,1 bis 10 Gew.-%, oder bevorzugt 0,2 bis 8 Gew.-%, oder bevorzugt 0,5 bis 5 Gew.-% des mindestens einen Pigments;
b. bevorzugt 5 bis 95 Gew.-%, oder bevorzugt 10 bis 93 Gew.-%, oder bevorzugt 20 bis 93 Gew.-%, oder bevorzugt 40 bis 93 Gew.-% der mindestens einen Isocyanatgruppen-haltigen Komponente, die freie Isocyanatgruppen aufweist;
c. 0,05 bis 15 Gew.-%, oder bevorzugt 0,1 bis 10 Gew.-% des mindestens einen Netzmittels und/oder Dispergiermittels;
d. 0,5 bis 25 Gew.-%, oder bevorzugt 1 bis 15 Gew.-% des mindestens einen Isocyanatgruppen-haltigen Anreibeharzes, enthaltend freie Isocyanatgruppen;
e. bevorzugt 0 bis 75 Gew.-%, oder bevorzugt 0 bis 50 Gew.-%, oder bevorzugt 0 bis 20 Gew.-%, oder bevorzugt 0 bis 10 Gew.-%, oder bevorzugt 0,1 bis 30 Gew.-% Lösemittel;
jeweils bezogen auf die Gesamtmenge der Formulierung, wobei die Summe aller Bestandteile der Formulierung 100 Gew.-% nicht übersteigt.

Vorzugsweise betrifft die Erfindung eine lagerstabile Isocyanatgruppen-haltige Formulierung, beinhaltend die Komponenten:
a. 0,1 bis 15 Gew.-%, oder bevorzugt 0,1 bis 10 Gew.-%, oder bevorzugt 0,2 bis 8 Gew.-%, oder bevorzugt 0,5 bis 5 Gew.-% des mindestens einen Pigments;
b. bevorzugt 5 bis 95 Gew.-%, oder bevorzugt 10 bis 93 Gew.-%, oder bevorzugt 20 bis 93 Gew.-%, oder bevorzugt 40 bis 93 Gew.-% der mindestens einen Isocyanatgruppen-haltigen Komponente, die freie Isocyanatgruppen aufweist;
c. 0 0,05 bis 15 Gew.-%, oder bevorzugt 0,1 bis 10 Gew.-% des mindestens einen Netzmittels und/oder Dispergiermittels;
d. 0,5 bis 25 Gew.-%, oder bevorzugt 1 bis 15 Gew.-% des mindestens einen Isocyanatgruppen-haltigen Anreibeharzes, enthaltend freie Isocyanatgruppen;
e. 0 bis 75 Gew.-%, oder bevorzugt 0 bis 50 Gew.-%, oder bevorzugt 0 bis 20 Gew.-%, oder bevorzugt 0 bis 10 Gew.-%, oder bevorzugt 0,1 bis 30 Gew.-% Lösemittel;
jeweils bezogen auf die Gesamtmenge der Formulierung, wobei die Summe aller Bestandteile der Formulierung 100 Gew.-% nicht übersteigt und wobei das molare Verhältnis der Summe aller Isocyanatgruppen der Isocyanat-haltigen Formulierung zu der Summe aller isocyanatreaktiven Gruppen, die nicht Isocyanatgruppen sind, in der Formulierung mindestens 8:1 beträgt.

Bevorzugt enthält die Formulierung
a. 0,5 bis 5 Gew.-% des mindestens einen Pigments;
b. 40 bis 93 Gew.-% der mindestens einen Isocyanatgruppen-haltigen Komponente, die freie Isocyanatgruppen aufweist;
c. 0,1 bis 10 Gew.-% des mindestens einen Netzmittels und/oder Dispergiermittels;
d. 1 bis 15 Gew.-% des mindestens einen Isocyanatgruppen-haltigen Anreibeharzes, enthaltend freie Isocyanatgruppen;
e. 0 bis 30 Gew.-% Lösemittel,
jeweils bezogen auf die Gesamtmenge der Formulierung, wobei die Summe aller Bestandteile der Formulierung 100 Gew.-% nicht übersteigt, wobei das molare Verhältnis der Summe der Isocyanatgruppen der Komponenten b und d. zu der Summe aller isocyanatreaktiven Gruppen in der Formulierung, die nicht Isocyanatgruppen sind, mindestens 8:1, mehr bevorzugt mindestens 11:1, besonders bevorzugt mindestens 20:1 beträgt.

Stabile, insbesondere lagerstabile Isocyanatgruppen-haltige Formulierungen im Sinne der Erfindung zeichnen sich dadurch aus, dass die Viskosität während einer mindestens 3-tägigen, oder bevorzugt mindestens 5-tägigen, oder bevorzugt von mindestens 7-tägigen, oder bevorzugt von mindestens 10-tägigen, oder bevorzugt von mindestens 14-tägigen Lagerung bei 50 °C lediglich einen Viskositätsanstieg von ≤ 500 %, bevorzugt von ≤ 300 %, oder bevorzugt von ≤ 200 %, oder bevorzugt von ≤ 100 %, oder bevorzugt von ≤ 50 % aufweisen. Insbesondere bevorzugt ist der Anstieg der Viskosität während einer 3-tägigen Lagerung bei 50 °C der Formulierung ≤ 100 %, bezogen auf die Ausgangsviskosität. Weiterhin bevorzugt beträgt der Anstieg der Teilchengröße in der Isocyanatgruppen-haltige Formulierung, gemessen mit dynamischer Lichtstreuung nach Redispergierung von gegebenenfalls gebildeten weichen Sedimenten, bezogen auf Z-Average, maximal 500 %, bevorzugt maximal 200 %, bevorzugt maximal 100 %, bevorzugt maximal 50 %. Unter weichen Sedimenten wird im Rahmen der Erfindung verstanden, dass sich die Sedimente durch Schütteln redispergieren.

Weiterhin bevorzugt weist die Formulierung zum Zeitpunkt der Bestimmung der Ausgangsviskosität oder nach ihrer Lagerung von mindestens 3 Tagen, oder bevorzugt von mindestens 10 Tagen, oder bevorzugt von mindestens 14 Tagen einen Gehalt an Isocyanatgruppen in einem Bereich von 2 bis 60 Gew.-%, oder bevorzugt in einem Bereich von 3 bis 50 Gew.-%, oder bevorzugt in einem Bereich von 4 bis 35 Gew.-%, oder bevorzugt in einem Bereich von 5 bis 20 Gew.-%, bezogen auf die Gesamtmenge der Formulierung.

Es ist bevorzugt, dass die Isocyanatgruppen-haltige Formulierung bevorzugt keine harten Sedimente beinhaltet. Unter harten Sedimenten wird im Rahmen der Erfindung verstanden, dass sich die Sedimente durch Schütteln nicht redispergieren lassen. Unter Schütteln wird bevorzugt ein Schütteln per Hand oder mittels üblicher Labor-Schüttelmaschinen verstanden. Als üblicher Laborschüttler kann ein IKA^{®} VORTEX 2 bei einer Drehzahl von 2000 rpm eingesetzt werden, wobei die Schüttelzeit bevorzugt in einem Bereich von 10 bis 60 Sekunden, oder bevorzugt in einem Bereich von 15 bis 40 Sekunden liegt.

### Pigmente

Als Pigmente können alle Pigmente verwendet werden, die der Fachmann für eine stabile Formulierung verwenden würde. Pigmente, die als Komponente a. bevorzugt Einsatz finden, können in mehrere Klassen unterteilt werden: organische oder anorganische Pigmente, die als Festkörperdispersion in Form von Teilchen, wenn nötig mit Hilfe eines geeigneten Netz- und/oder Dispergiermittels, dispergiert vorliegen. Die Pigmente werden entweder einzeln eingesetzt oder als eine Mischung aus mindestens zwei hiervon.

Das mindestens eine Pigment kann aus einer großen Vielzahl an Pigmentklassen ausgewählt werden. Wenn die Applikation Drucktechniken, insbesondere dem Inkjet-Druck entspricht, sind Pigmentteilchen mit einem Durchmesser kleiner oder gleich 100 µm, bevorzugt kleiner oder gleich 10 µm oder bevorzugt kleiner oder gleich 5 µm vorteilhaft.

Beispiele für geeignete organische Pigmente sind:
- Monoazopigmente:
   C.I. Pigment Brown 25;C.I. Pigment Orange 5, 13, 36 und 67;
   C.I. Pigment Red 1, 2, 3, 5, 8, 9, 12, 17, 22, 23, 31, 48 : 1, 48 : 2, 48 : 3, 48 : 4, 49, 49 : 1, 52 : 1, 52 : 2, 53, 53 : 1, 53 : 3, 57 : 1, 251, 112, 146, 170, 184, 210 und 245;
   C.I. Pigment Yellow 1, 3, 73, 74, 65, 97, 151 und 183;
- Naphthol AS Pigmente:
   C.I. Pigment Brown 1;
   C.I. Pigment Orange 22, 24, 38;
   C.I. Pigment Red 2, 5, 7, 8, 9, 10, 11, 12, 13, 14, 15, 16, 17, 18, 21, 22, 23, 31, 32, 95, 112, 114, 119, 136, 146,147, 148, 150, 151, 164, 170, 184, 187, 188, 210, 212, 213, 222, 223, 237, 239, 240, 243, 245, 247, 253, 256, 258, 261, 266, 267, 268, 269;
   C.I. Pigment Violet 13, 25, 44, 50;
- Disazopigmente:
   C.I. Pigment Brown 23;
   C.I. Pigment Orange 15, 16, 34 und 44;
   C.I. Pigment Red 144, 166, 214, 220, 221 242 und 248;
   C.I. Pigment Yellow 12, 13, 14, 16, 17, 55, 63, 81, 83, 87, 90, 106, 113, 114, 121, 126, 127, 152, 155, 170, 171, 172, 174, 176 und 188;
- Benzimidazolonpigmente:
   C.I. Pigment Brown 25
   C.I. Orange 36, 60, 62, 72
   C.I. Pigment Red 171, 175, 176, 185, 208
   C.I. Yellow 120, 151, 154, 175, 180, 181, 194
   C.I. Violet 32;
- Anthanthronpigmente:
   C.I. Pigment Orange 77;
   C.I. Pigment Red 168 (C.I. Vat Orange 3);
- Anthrachinonpigmente:
   C.I. Pigment Yellow 147, 193, 199, und 202;;
   C.I. Pigment Violet 31;
- Anthrapyrimidinpigmente:
   C.I. Pigment Yellow 108 (C.I. Vat Yellow 20);
- Chinacridonpigmente:
   C.I. Pigment Red 122, 202 und 206;
   C.I. Pigment Violet 19;
- Chinophthalonpigmente:
   C.I. Pigment Yellow 138;
- Diketopyrrolopyrrol-Pigmente
   C.I. Pigment Orange 71 und 73;
   C.I. Pigment Red 254, 255,264, und 272
- Dioxazinpigmente:
   C.I. Pigment Violet 23 und 37;
- Flavanthronpigmente:
   C.I. Pigment Yellow 24 (C.I. Vat Yellow 1);
- Indanthronpigmente:
   C.I. Pigment Blue 60 (C.I. Vat Blue 4) und 64 (C.I. Vat Blue 6);
- Isoindolinpigmente:
   C.I. Pigment Brown 38;
   C.I. Pigment Orange 66 und 69;
   C.I. Pigment Red 260;
   C.I. Pigment Yellow 139 und 185;
- Isoindolinonpigmente:
   C.I. Pigment Orange 61;
   C.I. Pigment Red 257 und 260;
   C.I. Pigment Yellow 109, 110, 173 und 185;
- Isoviolanthronpigmente:
   C.I. Pigment Violet 31 (C.I. Vat Violet 1);
- Metallkomplexpigmente:
   C.I. Pigment Green 8 und 10;
   C.I. Pigment Red 257
   C.I. Pigment Yellow 117, 129, 150 und 153;
- Perinonpigmente:
   C.I. Pigment Orange 43 (C.I. Vat Orange 7);
   C.I. Pigment Red 194 (C.I. Vat Red 15);
- Perylenpigmente:
   C.I. Pigment Black 31 und 32;
   C.I. Pigment Red 123, 149, 178, 179 (C.I. Vat Red 23), 190 (C.I. Vat Red 29) und 224;
   C.I. Pigment Violet 29;
- Phthalocyaninpigmente:
   C.I. Pigment Blue 15, 15 : 1, 15 : 2, 15 : 3, 15 : 4, 15 : 6 und 16;
   C.I. Pigment Green 7 und 36;
- Pyranthronpigmente:
   C.I. Pigment Orange 40 und 51;
   C.I. Pigment Red 216 (C.I. Vat Orange 4), 226;
- Thioindigopigmente:
   C.I. Pigment Red 88 und 181 (C.I. Vat Red 1);
   C.I. Pigment Violet 38 (C.I. Vat Violet 3);
- Triarylcarboniumpigmente:
   C.I. Pigment Blue 1, 2, 9, 10, 14, 61 und 62;
   C.I. Pigment Green 1 und 4;
   C.I. Pigment Red 81, 81 : 1 und 169;
   C.I. Pigment Violet 1, 2, 3, 27 und 39;
   C.I. Pigment Black 1 (Anilinschwarz);
   C.I. Pigment Yellow 101 (Aldazingelb);
   C.I. Pigment Brown 22;

Das mindestens eine Pigment ist bevorzugt ausgewählt aus der Gruppe bestehend aus P.B. 15:4 (z.B. Hostaperm^{®} Blue BT-617-D), P.V. 19 (z.B. Inkjet Magenta 5EB02), P.Y. 155 (z.B. Inkjet Yellow 4GC) oder einer Mischung aus mindestens zwei hiervon.

Beispiele für geeignete anorganische Pigmente:
- Weißpigmente:
   Titandioxid (C.I. Pigment White 6), Zinkweiß, Farbenzinkoxid; Zinksulfid, Lithopone; Bleiweiß;
- Schwarzpigmente:
   Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente:
   Chromoxid, Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36); Ultramarinblau; Eisenblau (C.I. Pigment Blue 27);
   Manganblau;
   Ultramarinviolett; Kobalt- und Manganviolett;
   Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinell- und Korundphasen (C.I. Pigment Brown 24, 29 und 31),
   Chromorange;
   Eisenoxidgelb (C.I. Pigment Yellow 42); Nickeltitangelb (C.I. Pigment Yellow 53; C.I. Pigment Yellow 157 und 164); Chrom titangelb; Cadmiumsulfid und Cadmiumzink sulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente:
   Metalleffektpigmente auf der Basis beschichteter Metallplättchen; Perlglanzpigmente auf der Basis metalloxidbeschichteter Glimmerplättchen; Flüssigkristallpigmente.

Das mindestens eine Pigment ist bevorzugt ausgewählt aus der Gruppe bestehend aus P.W. 6 (z.B. Kronos^{®} 2310), Pigment Black 6 oder 7 (z.B. NIPex^{®} 35) oder einer Mischung hieraus.

Die Isocyanatgruppen-haltige Komponente b. kann jede Komponente sein, die wenigstens eine Isocyanatgruppe beinhaltet und vom Fachmann für die lagerstabile Formulierung ausgewählt würde. Bevorzugt beinhaltet die Komponente b. ein Polyisocyanat.

Der Begriff "Polyisocyanat", wie hier verwendet, ist eine Sammelbezeichnung für Verbindungen, die im Molekül zwei oder mehrere Isocyanat-Gruppen -N=C=O enthalten. Bevorzugte Vertreter dieser Polyisocyanate sind die Diisocyanate. Diese haben die allgemeinen Struktur O=C=N-R-N=C=O, wobei R üblicherweise für aliphatische, alicyclische, araliphatische und/oder aromatische Reste steht.

Wenn hier allgemein von "Isocyanaten" die Rede ist, so sind damit sowohl Monoisocyanate als auch monomere und/oder oligomere Polyisocyanate gleichermaßen gemeint. Zum Verständnis vieler Aspekte der Erfindung ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Bevorzugt weist wenigstens eines der in der Isocyanatgruppen-haltigen Komponente b. enthaltenen monomeren oder oligomeren Polyisocyanate eine (mittlere) NCO-Funktionalität von 2,0 bis 6,0, oder bevorzugt von 2,3 bis 4,5 auf.

Als in der Isocyanatkomponente einzusetzende monomere Polyisocyanate sind bevorzugt solche monomeren Polyisocyanate mit einem Molekulargewicht im Bereich von 140 bis 400 g/mol geeignet, die aliphatisch, cycloaliphatisch, araliphatisch und/oder aromatisch gebundene Isocyanatgruppen enthalten. Diese Polyisocyanate sind auf verschiedene Weise, beispielsweise durch Phosgenierung in der Flüssig- oder Gasphase oder auf phosgenfreien Weg, wie z.B. durch thermische Urethanspaltung erhältlich.

Bevorzugte monomere Isocyanate mit aliphatisch gebundenen Isocyanatgruppen sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan.

In einer bevorzugten Ausführungsform der Formulierung ist die Isocyanatgruppen-haltige Komponente b. ausgewählt aus der Gruppe bestehend aus bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan, 1,3- und 1,4-Bis-(isocyanatomethyl)benzol (Xyxlylendiisocyanat; XDI), 1,3- und 1,4-Bis(1-isocyanato-1-methyl-ethyl)-benzol (TMXDI), 2,4- und 2,6-Diisocyanatotoluol (TDI), 2,4'- und 4,4'-Diisocyanatodiphenylmethan (MDI) und 1,5-Diisocyanatonaphthalin 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI) oder einer Mischung aus mindestens zwei hiervon, sowie gegebenenfalls Oligomere und Reaktionsprodukte hiervon.

In der Formulierung ist das Isocyanatgruppen-haltige Anreibeharz d. ausgewählt aus der Gruppe bestehend aus bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan, 1,3- und 1,4-Bis-(isocyanatomethyl)benzol (Xyxlylendiisocyanat; XDI), 1,3-und 1,4-Bis(1-isocyanato-1-methyl-ethyl)-benzol (TMXDI), 2,4- und 2,6-Diisocyanatotoluol (TDI), 2,4'- und 4,4'-Diisocyanatodiphenylmethan (MDI) und 1,5-Diisocyanatonaphthalin 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'-und 4,4'-Diisocyanatodicyclohexylmethan (H12MDI) oder einer Mischung aus mindestens zwei hiervon, sowie gegebenenfalls Oligomere und Reaktionsprodukte hiervon.

Das Isocyanatgruppen-haltige Anreibeharz d. und die Isocyanatgruppen-haltigen Komponente b. können identisch sein oder sich unterscheiden. Bevorzugt sind Komponente b. und Komponente d. unterschiedlich.

Bevorzugt beinhaltet die Isocyanatgruppen-haltige Komponente b. monomere Isocyanate mit cycloaliphatisch gebundenen Isocyanatgruppen ausgewählt aus der Gruppe bestehend aus 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Bevorzugte monomere Isocyanate mit araliphatisch gebundenen Isocyanatgruppen sind 1,3- und 1,4-Bis-(isorcyanatomethyl)benzol (Xyxlylendiisocyanat; XDI), 1,3- und 1,4-Bis(1-isocyanato-1-methyl-ethyl)-benzol (TMXDI).

Bevorzugte monomere Isocyanate mit aromatisch gebundenen Isocyanatgruppen sind 2,4- und 2,6-Diisocyanatotoluol (TDI), 2,4'- und 4,4'-Diisocyanatodiphenylmethan (MDI) und 1,5-Diisocyanatonaphthalin.

Weitere ebenfalls geeignete Diisocyanate finden sich darüber hinaus beispielsweise in Justus Liebigs Annalen der Chemie Band 562 (1949) S. 75 - 136.

Bevorzugt enthält die Isocyanatgruppen-haltige Komponente b. mindestens 40 Gew.-%, bevorzugt mindestens 50% Gew.-%, oder bevorzugt mindestens 60 Gew.-%, oder bevorzugt mindestens 70 Gew.-%, oder bevorzugt mindestens 80 Gew.-%, oder bevorzugt mindestens 90 Gew.-% an aliphatischen oder cyclo-aliphatischen Isocyanaten, bezogen auf die Gesamtmenge der Isocyanatgruppen-haltigen Komponente b..

In einer bevorzugten Ausführungsform der Formulierung beinhaltet die Formulierung die Isocyanatgruppen-haltige Komponente b., wobei die Isocyanatgruppen-haltige Komponente b. aus aliphatischen oder cyclo-aliphatischen Isocyanaten besteht.

Bevorzugt kann als Isocyanatgruppen-haltige Komponente b. mindestens ein Polyisocyanat eingesetzt werden. Bevorzugt einsetzbare oligomere Polyisocyanate sind aus den oben beschriebenen monomeren Polyisocyanaten durch den im folgenden Abschnitt beschriebenen Vorgang der "Modifizierung" monomerer Polyisocyanate erhältlich. Hierbei können oligomere Polyisocyanate durch Modifizierung einzelner der oben genannten monomeren Polyisocyanate erhalten werden. Es ist aber auch möglich, Gemische von wenigstens zwei der oben genannten monomeren Polyisocyanate zu modifizieren, so dass oligomere Polyisocyanate erhalten werden, die aus wenigstens zwei unterschiedlichen Monomeren aufgebaut sind.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

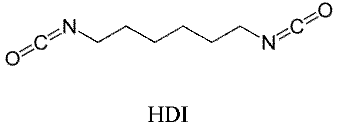

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

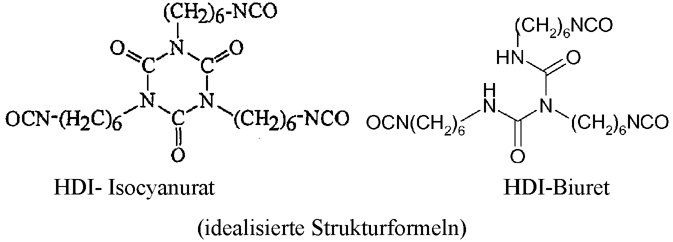

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

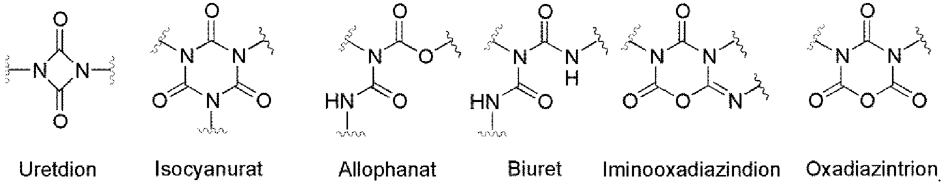

Vorteilhaft ist es oligomere Polyisocyanate einzusetzen, die eine Mischung aus mindestens zwei oligomeren Polyisocyanaten darstellen, wobei sich die mindestens zwei oligomere Polyisocyanate in ihrer Struktur unterscheiden. Diese ist vorzugsweise ausgewählt aus der Gruppe bestehend aus Uretdion-, Isocyanurat-, Allophanat-, Biuret-, Iminooxadiazindion- und Oxadiazintrionstruktur und deren Mischungen. Derartige Ausgangsmischungen können insbesondere im Vergleich zu Vernetzungsreaktionen mit oligomeren Polyisocyanaten nur einer definierten Struktur zu einer Beeinflussung des Tg-Wertes führen, was für viele Anwendungen vorteilhaft ist.

Bevorzugt wird im offenbarten Verfahren eine Isocyanatgruppen-haltigen Komponente b. eingesetzt, die mindestens ein oligomeres Polyisocyanat mit Biuret-, Allophanat-, Isocyanurat-, und/oder Iminooxadiazindionstruktur und gegebenenfalls Mischungen davon enthält.

Bevorzugt handelt es sich bei einem in der Isocyanatgruppen-haltigen Komponente b. enthaltenen oligomeren Polyisocyanat um eine solches, das nur eine einzelne definierte oligomere Struktur, beispielsweise ausschließlich oder größtenteils Isocyanuratstruktur, enthält. In der Regel liegen in den erfindungsgemäß verwendeten oligomeren Polyisocyanaten herstellungsbedingt aber immer mehrere unterschiedliche oligomere Strukturen nebeneinander vor.

Im Rahmen der vorliegenden Erfindung wird oligomeres Polyisocyanat als aus einer einzelnen definierten oligomeren Struktur aufgebaut angesehen, wenn eine oligomere Struktur ausgewählt aus Uretdion-, Isocyanurat-, Allophanat-, Biuret-, Iminooxadiazindion- und/oder Oxadiazintrionstruktur zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur in dem oligomeren Polyisocyanat, vorliegt.

Bevorzugt wird ein oligomeres Polyisocyanat einer einzelnen definierten oligomeren Struktur eingesetzt, wobei die oligomere Struktur aus Uretdion-, Isocyanurat-, Allophanat-, Biuret-, Iminooxadiazindion- und/oder Oxadiazintrionstruktur ausgewählt ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur im oligomeren Polyisocyanat, vorliegt.

Bevorzugt handelt es sich bei den oligomeren Polyisocyanaten um solche, die hauptsächlich Isocyanuratstruktur aufweisen, und die oben genannten Uretdion-, Allophanat-, Biuret-, Iminooxadiazindion- und/oder Oxadiazintrionstruktur lediglich als Nebenprodukte enthalten dürfen. So sieht eine Ausführungsform der Erfindung den Einsatz eines oligomeren Polyisocyanats einer einzelnen definierten oligomeren Struktur vor, wobei die oligomere Struktur eine Isocyanuratstruktur ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur im Polyisocyanat, vorliegt.

Es ist weiterhin möglich oligomere Polyisocyanate einzusetzen, die weitestgehend keine Isocyanuratstruktur aufweisen, und hauptsächlich mindestens einen der oben genannten Uretdion-, Allophanat-, Biuret-, Iminooxadiazindion- und/oder Oxadiazintrion-Strukturtypen enthalten. Gemäß einer besonderen Ausführungsform der Erfindung besteht das eingesetzte oligomere Polyisocyanat mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, aus oligomeren Polyisocyanaten, die einen Strukturtyp ausgewählt aus der Gruppe bestehend aus Uretdion-, Allophanat-, Biuret-, Iminooxadiazindion- und/oder Oxadiazintrionstruktur aufweisen.

Bevorzugt ist der Einsatz eines isocyanuratarmen Polyisocyanats, welches, bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, höchstens als 50 mol-%, vorzugsweise höchstens als 40 mol-%, bevorzugt höchstens als 30 mol-%, besonders bevorzugt höchstens als 20 mol-%, 10 mol-% oder 5 mol-% Isocyanuratstrukturen aufweist.

Bevorzugt ist der Einsatz eines oligomeren Polyisocyanats eines einzelnen definierten oligomeren Strukturtyps vor, wobei der oligomere Strukturtyp ausgewählt ist aus der Gruppe bestehend aus Uretdion-, Allophanat-, Biuret-, Iminooxadiazindion- und/oder Oxadiazintrionstruktur und dieser Strukturtyp zu mindestens 50 mol-%, vorzugsweise 60 mol-%, bevorzugt 70 mol-%, besonders bevorzugt 80 mol-%, insbesondere 90 mol-% , bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, vorliegt.

Die Anteile an Uretdion-, Isocyanurat-, Allophanat-, Biuret-, Iminooxadiazindion- und/oder Oxadiazintrionstruktur in der Isocyanatgruppen-haltigen Komponente b. können z.B. durch NMR-Spektroskopie bestimmt werden. Bevorzugt lässt sich hierbei die 13C-NMR-Spektroskopie, vorzugsweise protonenentkoppelt, einsetzen, da die genannten oligomeren Strukturen charakteristische Signale liefern.

Herstellverfahren für die in der Isocyanatgruppen-haltigen Komponente b. bevorzugt einzusetzenden oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben.

Bevorzugt ist ein einsetzbares oligomeres Polyisocyanat dadurch definiert, dass es oligomere Polyisocyanate enthält, die aus monomeren Diisocyanaten unabhängig von der Art der verwendeten Modifizierungsreaktion unter Einhaltung eines Oligomerisierungsgrades von 5 bis 45 %, vorzugsweise 10 bis 40 %, besonders bevorzugt 15 bis 30 %, erhalten wurde. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Uretdion-, Isocyanurat-, Allophanat-, Biuret-, Iminooxadiazindion- und/oder Oxadiazintrionstrukturen verbraucht wird.

Bevorzugt ist der Einsatz eines isocyanat-terminierte Prepolymere als oligomeres Polyisocyanat. Diese Präpolymere sind dem Fachmann bekannt und können durch Umsetzung eines Überschusses eines geeigneten monomeren Isocyanats, wie zuvor beschrieben, mit einer geeigneten isocyanat-reaktive Gruppen tragenden Verbindung erhalten werden.

Als isocyanat-reaktive Gruppen werden im Rahmen der vorliegenden Erfindung Amin-, Amid-, Urethan-, Alkohol-, Thiol-, Epoxid-, Carbonsäure-, Carbonsäureanhydrid-Gruppen oder Gruppen verstanden, die Zerewitinoff-aktiven Wasserstoff enthalten. Zur Definition von Zerewitinoff-aktivem Wasserstoff wird auf Römpp Chemie Lexikon, Georg Thieme Verlag Stuttgart verwiesen. Bevorzugt werden unter isocyanat-reaktiven Gruppen OH, NH und/oder SH verstanden. Obwohl Isocyanat-gruppen auch mit sich selbst reagieren können, sind diese ausdrücklich hier nicht inkludiert.

Beispiele für Verbindung mit isocyanat-reaktiven Gruppen sind ein- zwei, und mehrwertige Alkohole mit primären, sekundären und tertiären OH-Gruppen, analoge Thiole, Polyole, z.B. Polyether-, Polyester-, Polyacrylat-, Polycarbonatpolyole, analoge Polythiole, schwefelhaltige Hydroxyverbindungen, Amine (z.B. primär, sekundär, aliphatisch, cycloaliphatisch, aromatisch, sterisch gehindert), Polyamine und Asparaginsäure Ester.

Alkohole können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), aber auch höhermolekulare Polyhydroxyverbindungen wie Polyetherpolyole, Polyesterpolyole, Polycarbonatpolyole, Polysiloxanpolyole, sowie Polybutadienpolyole sein.

Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Bernsteinsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Amine können beliebige ein- oder mehrwertige Amine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine, Aminomethylcyclohexan, Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin, Dicyclohexylamin, Hydrazin, Ethylendiamin, 1,2-Diaminopropan, 1,4-Diaminobutan, 2-Methyl-pentamethylendiamin, 1,6-Diaminohexan, 2,2,4- bzw. 2,4,4-Trimethylhexamethylendiamin, 1,2-Diaminocyclohexan, 1-Amino-3,3,5-trimethyl-5-aminomethylcyclohexan (Isophorondiamin, IPDA), 4,4'-Diaminodicyclohexyl-methan, Pyrrolidin, Piperidin, Piperazin, (3-Aminopropyl)-trimethoxysilan, (3-Aminopropyl)-triethoxysilan und (3-Methylamino)propyl-trimethoxysilan, Aminoalkohole, wie z.B. 2-Aminoethanol, 2-Methylaminoethanol, 2-(Dimethylamino)-ethanol, 2-(Diethylamino)-ethanol, 2-(Dibutyl-amino)-ethanol, Diethanolamin, N-Methyl-diethanolamin, Triethanolamin, 3-Amino-1-propanol, 3-Dimethylamino-1-propanol, 1-Amino-2-propanol, 1-Dimethylamino-2-propanol, 1-Diethylamino-2-propanol, Bis-(2-hydroxypropyl)-amin, Bis-(2-hydroxypropyl)-methylamin, 2-(Hydroxyethyl)-bis-(2-hydroxypropyl)-amin, Tris-(2-hydroxypropyl)-amin, 4-Amino-2-butanol, 2-Amino-2-methylpropanol, 2-Amino-2-methyl-1,3-propandiol, 2-Amino-2-hydroxypropyl-1,3-propandiol und N-(2-Hydroxyethyl)-piperidin, Etheramine, wie z. B. 2-Methoxyethylamin, 3-Methoxypropylamin, 2-(2-Dimethylaminoethoxy)-ethanol und 1,4-Bis-(3-aminopropoxy)-butan oder aromatische Di- und Triamine mit wenigstens einem Alkylsubstituenten mit 1 bis 3 Kohlenstoffatomen am aromatischen Ring, wie z. B. 2,4-Toluylendiamin, 2,6-Toluylendiamin, 1-Methyl-3,5-diethyl-2,4-diaminobenzol, 1,3-Diethyl,2,4-diaminobenzol, 1-Methyl-3,5-diethyl-2,6-diaminobenzol, 1,3,5-Triethyl-2,6-diaminobenzol, 3,5,3',5'-tetraethyl-4,4'-diaminodiphenylmethan, 3,3'-Dimethyl-4,4'-diaminodiphenylmethan, 1-Ethyl-2,4-diaminobenzol, 1-Ethyl-2,6-diaminobenzol, 2,6-Diethylnaphthylen-1,5-diamin, 4,4'-Methylenebis-(2,6-Diisopropylaniline) sein.

Des Weiteren können auch Polyamine, wie z. B. die aus EP-B 0 403 921 bekannten Polyasparaginsäurederivate, oder auch solche Polyamine, deren Aminogruppen in blockierter Form vorliegen, wie z. B. Polyketimine, Polyaldimine oder Oxazolane, verwendet werden. Aus diesen blockierten Aminogruppen entstehen unter Feuchtigkeitseinfluss freie Aminogruppen und im Falle der Oxazolane auch freie Hydroxylgruppen, die unter Vernetzung mit Isocyanatgruppen abreagieren können.

Geeignete aminofunktionelle Komponenten sind insbesondere Polyasparaginsäureester, wie sie beispielsweise nach dem Verfahren der EP-B 0 403 921 durch Umsetzung von Diaminen mit Fumarsäure- bzw. Maleinsäureestern erhältlich sind.

Bevorzugte aminofunktionelle Verbindungen sind Polyetherpolyamine mit 2 bis 4, vorzugsweise 2 bis 3 und besonders bevorzugt 2 aliphatisch gebundenen primären Aminogruppen und einem zahlenmittleren Molekulargewicht Mn von 148 bis 12200, vorzugsweise 148 bis 8200, besonders bevorzugt 148 bis 4000 und ganz besonders bevorzugt 148 bis 2000 g/mol. Besonders geeignete Thiole sind Verbindungen, welche mindestens zwei Thiolgruppen pro Molekül aufweisen.

Bevorzugte Polythiole werden beispielsweise ausgewählt aus der Gruppe, bestehend aus einfachen Alkanthiolen, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol oder 2-Methylcyclohexan-2,3-dithiol, Thioethergruppen enthaltenden Polythiolen, wie z. B. 2,4-Dimercaptomethyl-1,5-dimercapto-3-thiapentan, 4-Mercaptomethyl-1,8-dimercapto-3,6-dithiaoctan, 4,8-Dimercaptomethyl-1,11-dimercapto-3,6,9-trithiaundecan, 4,7-Dimercaptomethyl-1,11-dimer-capto-3,6,9-trithiaundecan, 5,7-Dimercaptomethyl-1,11-dimercapto-3,6,9-trithiaundecan, 5,6-Bis-(mercaptoethylthio)-1,10-di-mercapto-3,8-dithiadecan, 4,5-Bis-(mercaptoethylthio)-1,10-dimercapto-3,8-dithiadecan, Tetrakis-(mercaptomethyl)methan, 1,1,3,3-Tetrakis(mercaptomethylthio)propan, 1,1,5,5-Tetrakis(mercapto-methylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis-(mercaptomethyl)sulfid, Bis(mercaptomethyl)disulfid, Bis(mercaptoethyl)-sulfid, Bis(mercapto-ethyl)disulfid, Bis(mercaptopropyl)sulfid, Bis(mercaptopropyl)disulfid, Bis(mercaptomethyl-thio)methan, Tris(mercaptomethylthio)methan, Bis(mercaptoethylthio)methan, Tris(mercapto-ethylthio)methan, Bis(mercaptopropylthio)methan, 1,2-Bis(mercaptomethylthio)ethan, 1,2-Bis-(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercapto-ethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian oder 2-(3-Bis(mercaptomethyl)-2-thiapropyl)-1,3-dithiolan, Polyesterthiolen, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercapto-acetat), 3-Mercapto-1,2-propandiol-bis(3-mercaptopropionat), Trimethylolpropan-tris(2-mercapto-acetat), Trimethylolpropan-tris(3-mercaptopropionat), Trimethylolethan-tris(2-mercaptoacetat), Trimethylolethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxy-methylsulfid-bis(2-mercaptoacetat), Hydroxymethylsulfid-bis(3-mercaptopropionat), Hydroxyethyl-sulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat oder Bis(2-mercaptoethylester)thiodipropionat und aromatischen Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris-(mercaptomethyl)benzol, 1,2,4-Tris(mercaptomethyl)benzol, 1,3,5-Tris(mercaptomethyl)benzol, 1,2,3-Tris-(mercaptoethyl)benzol, 1,3,5-Tris(mercaptoethyl)benzol, 1,2,4-Tris(mercaptoethyl)-benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercapto-benzol, 1,2,4,5-Tetramercaptobenzol, 1,2,3,4-Tetrakis(mercaptomethyl)benzol, 1,2,3,5-Tetrakis-(mercaptomethyl)benzol, 1,2,4,5-Tetrakis(mercaptomethyl)benzol, 1,2,3,4-Tetrakis(mercapto-ethyl)benzol, 1,2,3,5-Tetrakis-(mercaptoethyl)benzol, 1,2,4,5-Tetrakis(mercaptoethyl)benzol, 2,2'-Dimercaptobiphenyl oder 4,4'-Dimercaptobiphenyl. Solche Polythiole können einzeln oder auch in Form beliebiger Gemische untereinander verwendet werden.

Ebenso sind auch Schwefel enthaltende Hydroxyverbindungen geeignet. Solche Verbindungen enthalten bevorzugt mindestens ein Schwefel-Atom in Form von Thiogruppen, Thioethergruppen, Thioesterurethangruppen, Esterthiourethangruppen und/oder Polythioesterthiourethangruppen sowie mindestens eine OH-Gruppe.

Bevorzugte Schwefel enthaltende Hydroxyverbindungen können ausgewählt werden aus der Gruppe, bestehend aus einfachen Mercaptoalkoholen, wie z. B. 2-Mercaptoethanol, 3-Mercaptopropanol, 1,3-Dimercapto-2-propanol, 2,3-Dimercaptopropanol oder Dithioerythritol, Thioetherstrukturen enthaltenden Alkoholen, wie z. B. Di(2-hydroxyethyl)sulfid, 1,2-Bis(2-hydroxyethylmercapto)ethan, Bis(2-hydroxyethyl)disulfid oder 1,4-Dithian-2,5-diol, und Schwefel enthaltende Diole mit Polyesterurethan-, Polythioesterurethan-, Polyesterthiourethan- oder Polythioesterthiourethanstruktur der in der EP-A 1 640 394 genannten Art. Solche Schwefel enthaltenden Hydroxyverbindungen können einzeln oder auch in Form beliebiger Gemische untereinander verwendet werden.

Besonders bevorzugte Schwefel enthaltende Verbindungen sind Polyether- und Polyesterthiole der genannten Art. Ganz besonders bevorzugte Verbindungen können ausgewählt werden aus der Gruppe, bestehend aus 4-Mercaptomethyl-1,8-dimercapto-3,6-dithiaoctan, 1,1,3,3-Tetrakis(mercapto-methylthio)propan, 5,7-Dimercaptomethyl-1,11-dimercapto-3,6,9-trithiaundecan, 4,7-Dimercapto-methyl-1,11-dimercapto-3,6,9-trithiaundecan, 4,8-Dimercaptomethyl-1,11-dimercapto-3,6,9-trithiaun-decan, Trimethylolpropan-tris(2-mercaptoacetat), Trimethylolpropan-tris(3-mercaptopropionat), Pentaerythrit-tetrakis(2-mercaptoacetat) und Pentaerythrit-tetrakis(3-mercaptopropionat).

Ebenso sind auch Carbonsäuren, Carbonsäureanhydride und Epoxide als Verbindungen mit isocyanatreaktiven Gruppen geeignet.

Es ist ebenfalls möglich, dass die isocyanat-reaktive Komponente Gemische verschiedener Verbindungen mit isocyanat-reaktiven-Gruppen umfasst.

Grundsätzlich kann die Isocyanatgruppen-haltigen Komponente b. beliebige Mischungen verschiedener Polyisocyanate enthalten. Dies können die bereits oben beschriebenen Mischungen oligomerer und monomerer Polyisocyanate sein. Es kann sich auch um Mischungen verschiedener isocyanatterminierter Präpolymere handeln. Durch die freie Kombination aller geeigneten Polyisocyanate ist es möglich, die Eigenschaften der Formulierung und daraus hergestellter Beschichtungen wunschgemäß einzustellen.

Ebenfalls ist es bevorzugt für die Isocyanatgruppen-haltigen Komponente b., isocyanat-terminierte Präpolymere mit monomeren oder oligomeren Polyisocyanaten zu mischen. Diese Ausführungsform der Erfindung hat den Vorteil, dass monomere und/oder oligomere Polyisocyanate benutzt werden können, um die Viskosität eines isocyanat-terminierten Präpolymers herabzusetzen. Da die monomeren/oligomeren Polyisocyanate durch ihre Isocyanatgruppen untereinander und mit dem isocyanat-terminierten Präpolymer vernetzt werden können, sind diese am Ende ihrer Herstellung in der Formulierung gebunden. Sie wirken so als Reaktivverdünner.

In einer bevorzugten Ausführungsform der Formulierung weist die Formulierung mindestens eine der folgenden Eigenschaften bei Raumtemperatur (23°C) auf:
(A) eine Ausgangs-Viskosität in einem Bereich von 1 bis 200 mPas, bevorzugt von 1 bis 100 mPas, oder bevorzugt von 5 bis 50 mPas, oder bevorzugt von 5 bis 20 mPas;
(B) eine Ausgangs-Viskosität in einem Bereich von 30 bis 1000 mPas, bevorzugt von 50 bis 500 mPas, oder bevorzugt von 100 bis 500 mPas;
(C) eine Ausgangs-Viskosität in einem Bereich von 50 bis 2000 mPas, oder bevorzugt von 100 bis 1500 mPas, oder bevorzugt von 150 bis 1000 mPas;
(D) eine Ausgangs-Viskosität in einem Bereich von 1000 bis 100000 mPas, bevorzugt von 2000 bis 90000 mPas, oder bevorzugt von 2500 bis 50000 mPas;
(E) einen Gehalt an Isocyanatgruppen von weniger als 60 Gew.-%, bevorzugt weniger als 50 Gew.-%, oder bevorzugt weniger als 30 Gew.-%, oder bevorzugt weniger als 10 Gew.-%, oder bevorzugt weniger als 5 Gew.-%, oder bezogen auf die Gesamtmenge der Formulierung;
wobei die Formulierung eine der Eigenschaften ausgewählt aus (A) bis (D) in Kombination mit der Eigenschaft (E) aufweist. Die Viskositäten werden gemäß dem Verfahren wie unter Messmethoden beschrieben durchgeführt.

Weiterhin bevorzugt weist die Formulierung einen Gehalt an Isocyanatgruppen in einem Bereich von 2 bis 60 Gew.-%, oder bevorzugt in einem Bereich von 3 bis 50 Gew.-%, oder bevorzugt in einem Bereich von 4 bis 35 Gew.-%, oder bevorzugt in einem Bereich von 5 bis 20 Gew.-%, bezogen auf die Gesamtmenge der Formulierung.

In einer bevorzugten Ausgestaltung der Formulierung, weist die Formulierung mindestens eine der folgenden Eigenschaften bei Raumtemperatur auf:
(A) eine Ausgangs-Viskosität in einem Bereich von 5 bis 20 mPas; oder
(B) eine Ausgangs-Viskosität in einem Bereich von 100 bis 500 mPas; oder
(C) eine Ausgangs-Viskosität in einem Bereich von 150 bis 1000 mPas; oder
(D) eine Ausgangs-Viskosität in einem Bereich von 2500 bis 50000 mPas; und/oder
(E) einen Gehalt an Isocyanatgruppen von 2 bis 60 Gew.-%, bezogen auf die Gesamtmenge der Formulierung;
wobei die Formulierung eine der Eigenschaften ausgewählt aus (A) bis (D) in Kombination mit der Eigenschaft (E) aufweist.

Vorzugsweise betrifft die Erfindung eine lagerstabile Isocyanatgruppen-haltige Formulierung, beinhaltend die Komponenten:
a. mindestens ein Pigment,
b. gegebenenfalls mindestens eine Isocyanatgruppen-haltige Komponente, die freie Isocyanatgruppen aufweist,
c. mindestens ein Netzmittel und/oder Dispergiermittel,
d. mindestens ein Isocyanatgruppen-haltiges Anreibeharz enthaltend freie Isocyanatgruppen, und
e. gegebenenfalls Lösemittel,

wobei das molare Verhältnis der Summe aller Isocyanatgruppen der Isocyanat-haltigen Formulierung zu der Summe aller isocyanatreaktiven Gruppen, die nicht Isocyanatgruppen sind, in der Formulierung mindestens 8:1 beträgt, wobei die Formulierung mindestens eine der folgenden Eigenschaften bei Raumtemperatur aufweist:
   (A) eine Ausgangs-Viskosität in einem Bereich von 5 bis 20 mPas; oder
   (B) eine Ausgangs-Viskosität in einem Bereich von 100 bis 500 mPas; oder
   (C) eine Ausgangs-Viskosität in einem Bereich von 150 bis 1000 mPas; oder
   (D) eine Ausgangs-Viskosität in einem Bereich von 2500 bis 50000 mPas; und/oder
   (E) einen Gehalt an Isocyanatgruppen von 2 bis 60 Gew.-%, bezogen auf die Gesamtmenge der Formulierung;
und wobei die Formulierung eine der Eigenschaften ausgewählt aus (A) bis (D) in Kombination mit der Eigenschaft (E) aufweist.

Weiterhin bevorzugt weist die Formulierung einen Gehalt an Isocyanatgruppen in einem Bereich von 5 bis 20 Gew.-% auf, bezogen auf die Gesamtmenge der Formulierung.

Die Viskositätsbestimmungen zu (A) bis (D) wurden mit einem Physica MCR 301 (Anton Paar GmbH) mit einer Platte-Platte (Durchmesser 40 mm) Messgeometrie bei 20 °C Messtemperatur durchgeführt. Alle Viskositätsangaben beziehen sich auf eine Scherrate von 500 [1/s].

Bevorzugt liegen die dispergierten Pigmente in der Formulierung mit einer mittleren Teilchengröße (Z-Average) von kleiner 20 µm, oder bevorzugt kleiner 5 µm, oder bevorzugt kleiner 1µm, oder bevorzugt kleiner 0,5 µm, oder bevorzugt kleiner 0,2 µm vor. Außerdem ist es bevorzugt, dass die Verteilung monomodal ist. Weiterhin bevorzugt ist es, dass die Verteilung, angegeben durch den Polydispersitätsindex (PDI), kleiner 0,6, oder bevorzugt kleiner 0,45, oder bevorzugt kleiner 0,35 oder bevorzugt kleiner 0,2 ist.

In einer bevorzugten Ausführungsform der Formulierung weist die Formulierung einen Anstieg der Teilchengröße bei Lagerung bei 50 °C und Normaldruck über einen Zeitraum von 3 Tagen von weniger als 500 %, bezogen auf die ursprüngliche Teilchengröße der Formulierung, bezogen auf den Z-Average, das das intensitätsgewichtete harmonische Mittel des hydrodynamischen Durchmessers angibt, gemessen mittels dynamischer Lichtstreuung auf. Die Teilchengrößenmessungen wurden mittels dynamischer Lichtstreuung mit einem Zetasizer Nano ZS (Malvern Instruments Ltd.) bei einer Temperatur von 20 °C durchgeführt. Der Polydispersitätsindex wird ebenfalls mit Hilfe des Zetasizer Nano ZS bestimmt.

Die Komponente c. kann sowohl Netzmittel oder Dispergiermittel oder gegebenenfalls Netz- und Dispergiermittel beinhalten. Die Komponente c. kann Verbindungen enthalten, die sowohl als Netzmittel als auch als Dispergiermittel fungieren. Als Netzmittel c. können alle dem Fachmann für das Benetzen von Pigmenten geeignete Verbindungen verwendet werden.

Für die zuverlässige Dispergierung und Stabilisierung von Pigmenten in Beschichtungssystemen verwendet man im allgemeinen Dispergiermittel, um so die für eine effektive Dispergierung der Feststoffe benötigten mechanischen Scherkräfte zu reduzieren und gleichzeitig möglichst hohe Füllgrade zu realisieren. Die Dispergiermittel unterstützen das Aufbrechen von Agglomeraten, benetzen und belegen als oberflächenaktive Materialien die Oberfläche der zu dispergierenden Partikel und stabilisieren diese gegen eine unerwünschte Reagglomeration. Die Stabilisierung der Pigmente ist beispielsweise in der Lackindustrie von großer Bedeutung, denn Pigmente bestimmen als wichtiger Formulierungsbestandteil das optische Erscheinungsbild und die physikalisch chemischen Eigenschaften einer Beschichtung. Damit sie in der Beschichtung ihre Wirkung optimal entfalten können, sollten sie während des Dispergierprozesses gleichmäßig und feinteilig im Lack verteilt werden. Die bevorzugt feinverteilten Pigmente sollten stabilisiert werden, damit dieser Zustand bei der Herstellung, der Lagerung, der Verarbeitung und der anschließenden Anwendung wie Filmbildung erhalten bleibt. Eine Wiedervereinigung der Primärteilchen und Aggregate kann zu Bodensatzbildung in Form von harten und/oder weichen Sedimenten, Viskositätserhöhung, Glanzgradverlusten, ungenügender Farbtiefe, geringem Deckvermögen, Auf- und Ausschwimmen der Pigmente und schlecht reproduzierbaren Farbtönen führen wie in Goldschmidt, Streitberger; BASF Handbuch Lackiertechnik, BASF Münster und Vincentz Verlag Hannover 2002, S. 205 ff bereits beschrieben.

Bevorzugt werden Bykjet^{®} 9131 oder Disperbyk^{®} 2200, oder eine Mischung hiervon eingesetzt.

Dem Fachmann ist bekannt, dass eine Vielzahl an Pigmenten beispielsweise für die Verwendung in Druckfarben, Lacken oder verwandten Anwendungsgebieten nur schwerlich in Formulierungen dispergierbar sind. Um den Energieeintrag zu verringern, der nötig ist, um Pigmentteilchen in einem flüssigen Medium zu dispergieren, werden daher oftmals Netz- und Dispergiermittel verwendet. Es ist eine Vielzahl von verschiedenen Substanzen bekannt, die heute Verwendung als Dispergiermittel für Pigment und Füllstoffe findet.

Bevorzugt ist das Dispergiermittel c. ausgewählt aus der Gruppe bestehend aus Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit basischen pigmentaffinen Gruppen, modifizierten Acrylatblockcopolymeren, modifizierten Polyurethanen, modifizierten und/oder versalzten Polyaminen, Epoxid-Amin-Addukten, Phosphorsäureestern von Polyethern, Polyester und Polyether-Estern, basischen oder sauren Ethoxylaten wie alkoxylierten Mono- oder Polyaminen oder sauren 1,2-Dicarbonsäureanhydridhalbestern von alkoxylierten Monoalkoholen, Reaktionsprodukte von ungesättigten Fettsäuren mit Mono-, Di- und Polyaminen, Aminoalkoholen, und ungesättigten 1,2-Dicarbonsäuren und deren Anhydriden und deren Salze und Umsetzungsprodukte mit Alkoholen und/oder Aminen; Polymeren und Copolymeren mit Fettsäureresten, modifizierten Polyacrylaten, wie umgeesterten Polyacrylaten, modifizierten Polyestern, wie säurefunktionellen und/oder aminofunktionellen Polyestern, Polyphosphaten sowie Mischungen aus mindestens zwei hieraus.

Als Dispergiermittel werden bevorzugt solche Verbindungen ausgewählt, wie sie in den Druckschriften, EP 0 154 678 B1, EP 0 270 126 B1 , EP 031899981 , EP 041749081 , EP 0879860 B1 , EP 0893155 B1 , EP 1081 169 B1 , EP1416019 A1 , EP 1486 524 A1 , EP 1593 700 B1 , EP 1640 389 A1 , EP 1650 246 A1 , EP 1742 990 , EP 1803 753 , EP 1837 355 , DE 102006048144 , DE 102006062439 , DE 102006062440 , DE 102006062441 und DE 102007005720 beschrieben sind.

Als Isocyanatgruppen-haltiges Anreibeharz d., das freie Isocyanatgruppen enthält, können alle Verbindungen eingesetzt werden, die der Fachmann für eine erfindungsgemäße Formulierung als Isocyanatgruppen-haltiges Anreibeharz auswählen würde. Diese Verbindungen werden bevorzugt ebenfalls aus der Gruppe der Isocyanatgruppen-haltigen Verbindungen ausgewählt, die bereits für die Isocyanatgruppen-haltige Komponente b. beschrieben wurde.

Bevorzugt unterscheiden sich die Isocyanatgruppen-haltigen Komponente b. und das Isocyanatgruppen-haltige Anreibeharz d. in mindestens einer Eigenschaft. Bevorzugt unterscheidet sich die Viskosität der Komponente b. von der Viskosität des Anreibeharzes d., bevorzugt in einem Bereich von 20 bis 10.000 mPas, mehr bevorzugt in einem Bereich von 30 bis 5.000 mPas. Weiterhin bevorzugt hat das Isocyanatgruppen-haltige Anreibeharz d. eine höhere Viskosität, bevorzugt eine um mindestens 20 mPas, mehr bevorzugt eine um 50 mPas höhere Viskosität als die Isocyanatgruppen-haltigen Komponente b.. Das Anreibeharz wird bevorzugt so ausgewählt, dass es sich zum Anreiben der Pigmente ideal eignet, während die Isocyanat-haltige Komponente b. so ausgewählt wird, dass die gewünschte Viskosität oder die gewünschte Funktionalität der Formulierung erhalten wird.

Weiterhin bevorzugt weist das Isocyanatgruppen-haltige Anreibeharz d. eine höhere Viskosität auf als die Isocyanatgruppen-haltigen Komponente b..

Das Isocyanatgruppen-haltige Anreibeharz kann auch aus einer beliebigen Mischung der verschiedenen für die Komponente d. beschriebenen Verbindungen bestehen.

Geeignete Lösemittel sind alle solche Lösemittel e., die die Isocyanatgruppen-haltige Komponente b. bevorzugt vollständig lösen. Bevorzugt werden Lösemittel eingesetzt, die nicht oder nur langsam mit Isocyanaten reagieren und diese bevorzugt vollständig lösen sowie einen Siedepunkt > 30°C und < 300°C aufweisen. Weiterhin bevorzugt sind solche Lösemittel e., die einen geringen Wassergehalt aufweisen, bevorzugt weniger als 1 Gew.-%, bevorzugt weniger als 0,5 Gew.-%, oder bevorzugt weniger als 0,1 Gew.-%, oder bevorzugt weniger als 0,01 Gew.-%,bezogen auf die Gesamtmenge Lösemittel e..

Beispielhaft seien Lösungsmittel beinhaltend Strukturelemente ausgewählt aus Keton, Ester, Ether, alicyclische Ringe, heterocyclische Ringe, Aromaten, Chlor und beliebige Mischungen derselben genannt wie z.B. Ethylacetat, Butylacetat, Methoxypropylacetat, Aceton, Methylethylketon, Methylisobutylketon, Cyclohexanon, Toluol, Xylol, DMSO, DMF, N-Methyl-2-pyrrolidon, N-Ethyl-2-pyrrolidon, Ethylenglycoldimethylether, Bis(2-methoxyethyl)ether, Solventnaphtha^{®} 100 und deren Mischungen. Bevorzugte Lösungsmittel sind Methylethylketon, Ethylacetat, Butylacetat, Butylglykolacetat und 2-Ethylhexylacetat.

Das Lösemittel e. kann entweder ein einzelnes Lösemittel sein oder eine beliebige Mischung aus mindestens 2 bevorzugt vorgenannten Lösemitteln sein.

Sollten in dem Lösemittel e. Isocyanat-reaktive Gruppen enthalten sein, so werden diese Gruppen bei der Ermittlung des Verhältnisses von Isocyanatgruppen zu isocyanatreaktiven Gruppen bei der Herstellung der Formulierung berücksichtigt. Bevorzugt ist der Gehalt der Isocyanat-reaktiven Gruppen in dem Lösemittel e. kleiner als 20 Gew.-%, oder bevorzugt kleiner als 10 Gew.-%, oder bevorzugt kleiner als 5 Gew.-%, oder bevorzugt kleiner als 3 Gew.-%, bezogen auf die Gesamtmenge Lösemittel e..

Ebenfalls offenbart ist ein Verfahren zur Herstellung von lagerstabilen Isocyanatgruppen-haltige Formulierungen mindestens mit den Schritten:
i. Anreiben mindestens eines Pigments a. in mindestens einem Isocyanatgruppen-haltigen Anreibeharz d, das freie Isocyanatgruppen aufweist, in Anwesenheit mindestens eines Netzmittels und/oder Dispergiermittels c. und gegebenenfalls eines Lösemittels e. oder einer Lösemittelmischung unter Erhalt einer Pigmentanreibung, wobei die üblichen, dem Fachmann bekannten, Dispergierapparate verwendet werden können, bis die gewünschte Teilchengröße des mindestens eines Pigments erreicht wird,
ii. gegebenenfalls Verdünnen der erhaltenen Pigmentanreibung aus Schritt i. mit Lösungsmittel e.,
iii. gegebenenfalls Mischen der Pigmentanreibung aus Schritt i. oder Schritt ii. mit einer Isocyanatgruppen-haltigen Komponente b., die freie Isocyanatgruppen beinhaltet, unter Erhalt der Isocyanatgruppen-haltigen Formulierung,
wobei das molare Verhältnis der Summe der Isocyanatgruppen zu der Summe aller isocyanatreaktiven Gruppen in der Formulierung, die nicht Isocyanatgruppen sind, mindestens 8:1, oder bevorzugt mindestens 11:1, oder bevorzugt mindestens 15:1, oder bevorzugt mindestens 20:1, oder bevorzugt mindestens 50:1, oder bevorzugt mindestens 100:1 beträgt.

Bevorzugt werden in dem Verfahren die Schritte in der Reihenfolge zunächst i., dann gegebenenfalls ii. und erst im Anschluss gegebenenfalls iii. durchgeführt.

In einer bevorzugten Ausführungsform des Verfahrens liegen zwischen den Schritten i. und iii. nicht mehr als 60 Minuten, mehr bevorzugt ≤ 45 Minuten, besonders bevorzugt ≤30 Minuten, ganz besonders bevorzugt ≤ 15 Minuten.

Stabile, insbesondere lagerstabile Isocyanatgruppen-haltige Formulierungen im Sinne der Erfindung zeichnen sich bevorzugt dadurch aus, dass die Viskosität während einer mindestens 3-tägigen, oder bevorzugt mindestens 5-tägigen, oder bevorzugt von mindestens 7-tägigen, oder bevorzugt von mindestens 10-tägigen, oder bevorzugt von mindestens 14-tägigen Lagerung bei 50 °C lediglich einen Viskositätsanstieg von ≤ 500 %, bevorzugt von ≤ 300 %, oder bevorzugt von ≤ 200 %, oder bevorzugt von ≤ 100 %, oder bevorzugt von ≤ 50 % aufweisen. Insbesondere bevorzugt ist der Anstieg der Viskosität während einer 3-tägigen Lagerung bei 50 °C der Formulierung ≤ 100 %, bezogen auf die Ausgangsviskosität. Weiterhin bevorzugt beträgt der Anstieg der Teilchengröße in der Isocyanatgruppen-haltige Formulierung, gemessen mit dynamischer Lichtstreuung nach Redispergierung von gegebenenfalls gebildeten weichen Sedimenten, bezogen auf Z-Average, maximal 500 %, bevorzugt maximal 200 %, bevorzugt maximal 100 %, bevorzugt maximal 50 %. Unter weichen Sedimenten wird im Rahmen der Erfindung verstanden, dass sich die Sedimente durch Schütteln redispergieren.

Bevorzugt zeichnen sich lagerstabile Isocyanatgruppen-haltige Formulierungen dadurch aus, dass Sie während der Lagerung keine harten Sedimente bilden. Unter harten Sedimenten wird im Rahmen der Erfindung verstanden, dass sich die Sedimente durch Schütteln nicht redispergieren lassen. Unter Schütteln wird bevorzugt ein Schütteln per Hand oder mittels üblicher Labor-Schüttelmaschinen verstanden. Als Laborschüttler wurde ein IKA^{®} VORTEX 2 bei einer Drehzahl von 2000 rpm eingesetzt, wobei die Schüttelzeit bevorzugt in einem Bereich von 10 bis 60 Sekunden, oder bevorzugt in einem Bereich von 15 bis 40 Sekunden liegt.

Ein weiterer Gegenstand der Erfindung ist eine Verwendung der erfindungsgemäßen Formulierung zur Beschichtung oder zum Bedrucken von Substrat-Oberflächen zum Erhalt von beschichteten Objekten. Zum Erhalt von beschichteten Objekten wird bevorzugt die erfindungsgemäße Formulierung auf das Objekt aufgetragen.

Ein weiterer Gegenstand der Erfindung betrifft ein entsprechend der erfindungsgemäßen Verwendung beschichtetes oder bedrucktes Objekt. Die Beschichtung oder das Bedrucken erfolgt dabei bevorzugt vollflächig, kann alternativ auch nur auf einem Teil der Oberfläche des Substrates erfolgen.

In einer bevorzugten Ausführungsform des Objektes ist das Substrat ausgewählt aus der Gruppe bestehend aus Textil, Holz, Plastik, Glas, Keramik, Carbon, Metall oder einer Kombination aus mindestens zwei hiervon. Bevorzugt erfolgt die Beschichtung als geschlossene Schicht zumindest auf einem Teil der Oberfläche.

Das Beschichten erfolgt bevorzugt mittels eines Verfahrens, das der Fachmann hierfür auswählen würde. Das Beschichten ist bevorzugt ausgewählt aus der Gruppe bestehend aus Pinseln, Gießen, Rakeln, Sprühen, Tauchen, Fluten, Walzen oder einer Kombination von mindestens zwei hieraus. Hierzu können alle in der Technik bekannten Verfahrensvarianten eingesetzt werden.

Das Bedrucken kann jedes Drucken sein, das der Fachmann hierfür anwenden würde. Bevorzugt ist das Bedrucken ausgewählt aus Hochdruck, Tiedruck, Flachdruck, Durchdruck, Tampondruck, Stemepldruck, Frottagedruck, Prägedruck, Off-set Druck, Siebdruck, Digitaldruck oder einer Kombination von mindestens zwei hiervon. Bevorzugte Digitaldruckverfahren sind Inkjet und Valvejet Verfahren und Verfahren, die auf ähnlicher Funktionsweise beruhen.

Ein weiterer Gegenstand der Erfindung betrifft eine Verwendung der erfindungsgemäßen Formulierung als Tinte. Zum Erhalt von mit der Tinte bedruckten Objekten wird bevorzugt die erfindungsgemäße Formulierung auf das Objekt aufgedruckt.

Eine bevorzugte Ausführungsform der erfindungsgemäßen Verwendung der erfindungsgemäßen Formulierung als Tinte ist die Formulierung als Tinte für den Digitaldruck. Als Tinte für den Digitaldruck weist die Formulierung bevorzugt eine Viskosität in einem Bereich von 1 bis 200 mPas, oder bevorzugt in einem Bereich von 1 bis 100 mPas, oder bevorzugt in einem Bereich von 3 bis 50 mPas, oder bevorzugt in einem Bereich von 3 bis 20 mPas.

Ein weiterer Gegenstand der Erfindung betrifft ein bedrucktes Objekt erhältlich unter Verwendung der erfindungsgemäßen Formulierung als Tinte, insbesondere als Tinte für die Digitaldruckverfahren.

In einer bevorzugten Ausführungsform ist das Material des Objekts ausgewählt aus der Gruppe bestehend aus Textil, Holz, Plastik, Glas, Keramik, Carbon, Metall oder einer Kombination aus mindestens zwei hiervon.

Ein weiterer Gegenstand der Erfindung betrifft die Verwendung eines Polyisocyanats als Anreibeharz d. für die erfindungsgemäßen lagerstabilen Isocyanatgruppen-haltigen Formulierungen

In einer bevorzugten Ausführungsform der Verwendung des Polyisocyanats als Anreibeharz d. weist das Anreibeharz d. eine Viskosität in einem Bereich von 100 bis 5 000 mPas, oder bevorzugt in einem Bereich von 200 bis 2 000 mPas, oder bevorzugt in einem Bereich von 350 bis 1 000 mPas auf.

### Messmethoden:

Alle Prozentangaben, bei denen es sich um Gewichtsangaben handelt, beziehen sich stets auf Gewichtsprozent, sofern nicht anders angegeben.

Alle Viskositätsbestimmungen wurden mit einem Physica MCR 301 (Anton Paar GmbH) mit einer Platte-Platte (Durchmesser 40 mm) Messgeometrie bei 20 °C Messtemperatur durchgeführt. Alle Viskositätsangaben beziehen sich auf eine Scherrate von 500 [1/s], sofern nicht anders angegeben. Die Ausgangs-Viskosität wird gemäß der Erfindung definiert als die Viskosität nach 1 Stunde nach zusammenfügen sämtlicher gewünschte Komponenten, insbesondere der ausgewählten Komponenten a. bis d..

Alle Teilchengrößenmessungen wurden mittels dynamischer Lichtstreuung mit einem Zetasizer Nano ZS (Malvern Instruments Ltd.) bei einer Temperatur von 20 °C durchgeführt. Alle Messwerte beziehen sich stets auf das intensitätsgewichtete harmonische Mittel des hydrodynamischen Durchmessers (Z-Average).

### Beispiele

Agglomerierte Pigmentteilchen wurden bei der Herstellung von Pigmentpasten zerkleinert. Hierzu war ein hoher Energieeintrag in das Mahlgut nötig. Der Energieeintrag kann beispielsweise durch Ultraschall, Rotor-Stator-Systemen oder Walzwerken erfolgen. Eine weitere dem Fachmann bekannte Methode ist das Mahlen der Partikel-Agglomerate in dem Medium, in dem sie dispergiert werden sollen, z. B. in Kugel- oder Perlmühlen. Die Herstellung pigmentierter Pasten wurde mit Hilfe eines Dispermat LC30 (VMA-Getzmann GmbH) in einem 125 ml doppelwandigen Temperiergefäß aus Edelstahl hergestellt. In einem ersten Schritt wurden alle Materialien in dieses Gefäß eingewogen und von Hand vermischt. Im Fall von Disperbyk^{®} 2200 wurde dieses 30 Minute vor dem Zusammengeben aller Komponenten in dem Lösemittel p-Xylol gelöst. Anschließend wurde mit einer Dispergierscheibe (Durchmesser 30 mm) für 10 Minuten bei 10000 U/min vordispergiert, bis eine homogene Masse (Mahlgut) entstand. Das Dispergierwerkzeug wurde dann durch eine Einfachmahlscheibe aus Polyamid (Durchmesser 32 mm) ersetzt. Dem Mahlgut wurden anschließend Zirkonoxid-Perlen (Yttrium stabilisiert) mit einem mittleren Durchmesser von 0,6 bis 0,8 mm zugefügt. Unter laufender Kühlung wurde das Mahlgut für 90 Minuten bei einer Umdrehungsgeschwindigkeit von 14000 U/min fein gemahlen. Nach der Dispergierung wurden die Mahlperlen durch Filtration entfernt.

Die Herstellung der pigmentierten Isocyanatgruppen-haltigen Formulierungen unter Verwendung eines Isocyanatgruppen-haltigen Anreibeharzes wurde wie folgt durchgeführt:
Die pigmentierte Paste wurde innerhalb von maximal 60 Minuten nach ihrer Herstellung in einem 30 mL Glasgefäß vorgelegt. Anschließend wurde das Lösemittel (wenn in der Formulierung enthalten) unter Rühren schrittweise zugegeben. In einem letzten Schritt wurde die Isocyanatkomponente schrittweise und unter Rühren zugesetzt, bis sich ein homogenes Gemisch ergab.

### Materialien

Organische Pigmente wurden bei der Fa. Clariant SE,. anorganisches Titandioxid bei der Fa. Kronos Worldwide Inc. und schwarze Rußpigmente bei der Fa. Orion Engineered Carbons GmbH beschafft. Die genauen Produktbezeichnungen sind der Tabelle 1 zu entnehmen.

**Tabelle 1: Pigmente (Komponente a.)**

| **Nr.** | **Name** | **Hersteller** | **Pigmentfarbe** | **Color Index** | **Pigmentklasse (chemisch)** | **Dichte (g/cm³)** | **Primärteilchengröße (nm)** |
|---|---|---|---|---|---|---|---|
| 1 | Hostaperm^{®} Blue BT-617-D | Clariant SE | Cyan | P.B 15:4 | Phthalocyanin | 1,62 | 65 |
| 2 | Inkjet Magenta 5EB02 | Clariant SE | Magenta | P.V. 19 | Chinacridon | 1,5 | 70 |
| 3 | Inkjet Yellow 4GC | Clariant SE | Gelb | P.Y. 155 | Disazo | 1,5 | 90 |
| 4 | Kronos^{®} 2310 | Kronos Worldwide Inc. | Weiß | P.W. 6 | Titandioxid | 4 | k.A.^{*} |
| 5 | NIPex^{®} 35 | Orion Engineered Carbons GmbH | Schwarz | P. Bk. 7 | Furnace Ruß | k.A. | 31 |

| | | | | | | | |
|---|---|---|---|---|---|---|---|
| * k.A. = keine Angabe | | | | | | | |

Lösemittel sind bei einer Vielzahl von Herstellern verfügbar. Für die Patentbeispiele kamen Lösemittel von der Fa. Sigma-Aldrich und Fluka zum Einsatz.

**Tabelle 2: Lösemittel (Komponente d.)**

| **Nr.** | **Lösemittel** | **CAS-Nummer** | **Hersteller** |
|---|---|---|---|
| 1 | Butylacetat (BuAc) ACS reagent, ≥99.5% (GC) | 123-86-4 | Sigma-Aldrich |
| 2 | Butylglykolacetat (BGA) 99% | 112-07-2 | Sigma-Aldrich |
| 3 | p-Xylol, puriss .p.a. ≥99,0% (GC) | 106-42-3 | Fluka |

Netz- und Dispergierhilfsmittel (auch Dispergieradditiv genannt) können bei unterschiedlichen Herstellern beschafft werden. Für die Patentbeispiele wurden Produkte von der Fa. Byk Additives & Instruments GmbH eingesetzt.

**Tabelle 3: Netz- und Dispergieradditiv (Komponente c.)**

| **Nr.** | **Dispergieradditiv** | **Hersteller** | **Struktur** | **Summe aus Hydroxyl-, Amin- und Säurezahl bezogen auf Lieferform Additiv (mg KOH/g)** | **nfA (%)** |
|---|---|---|---|---|---|
| 1 | Bykjet^{®} 9131 | Byk Additives & Instruments GmbH | Lösung eines strukturierten | 144 | 40 |
| | | | Copolymeren mit pigmentaffinen Gruppen | | |
| 3 | Disperbyk^{®} 2200 | Byk Additives & Instruments GmbH | Hochmolekulares | 30,7 | 100 |
| | | | Copolymer mit pigmentaffinen Gruppen | | |

Isocyanatgruppen-haltige Verbindungen wurden bei der Fa. Covestro AG beschafft.

**Tabelle 4: Isocyanatgruppen-haltige Verbindungen (Komponente b.)**

| **Nr.** | **Isocyanat** | **Hersteller** | **NCO-Gehalt (%)** |
|---|---|---|---|
| 1 | Desmodur^{®} H | Covestro AG | Hexamethylendiisocyanat (HDI), monomeres aliphatisches Diisocyanat mit einem Molgewicht von 168, einem Equivalentgewicht von 84, einem NCO-Gehalt ≥ 49,7 % nach DIN EN ISO 11909 und einer Reinheit von ≥ 99,5 % (GC). |
| 2 | Desmodur^{®} N3400 | Covestro AG | Aliphatisches Polyisocyanat (HDI-Uretdion) mit einem NCO-Gehalt von 21,8 ± 0,7 % nach DIN EN ISO 11909, einer Viskosität bei 23 °C von 175 ± 75 mPas nach DIN EN ISO 3219/A.3 und einem Gehalt an monomeren HDI ≤ 0,3 % nach DIN EN ISO 10283 |
| 3 | Desmodur^{®} N3600 | Covestro AG | Aliphatisches Polyisocyanat (niedrigviskoses HDI-Trimerisat) mit einem NCO-Gehalt von 23,0 ± 0,5 % nach M105-ISO 11909, einer Viskosität bei 23 °C von 1.200 ± 300 mPas nach M014-ISO 3219/A.3 und einem Gehalt an monomeren HDI ≤ 0,25 % nach M106-ISO 10283. |

**Tabelle 5: Isocyanatgruppen-haltiges Anreibeharz (Komponente d.)**

| **Nr.** | **Isocyanat** | **Hersteller** | **NCO-Gehalt (%)** |
|---|---|---|---|
| 1 | Desmodur ^{®} N3600 | Covestro AG | Aliphatisches Polyisocyanat (niedrigviskoses HDI-Trimerisat) mit einem NCO-Gehalt von 23,0 ± 0,5 % nach M105-ISO 11909, einer Viskosität bei 23 °C von 1.200 ± 300 mPas nach M014-ISO 3219/A.3 und einem Gehalt an monomeren HDI ≤ 0,25 % nach M106-ISO 10283. |

**Tabelle 6: Formulierungen 1 - 12 mit verschiedenen NCO/NCO-reaktive Gruppe Verhältnissen.**

| Beispiel / Einwaage [g] | 1 (Vergleich) | 2 | 3 | 4 | 5 | 6 | 7a |
|---|---|---|---|---|---|---|---|
| **Paste** | | | | | | | |
| **Isocyanatgruppen-haltiges Anreibeharz d. (aus Tabelle 5)** | | | | | | | |
| Desmodur^{®} N3600 | 4,73 | 4,73 | 37,00 | 4,53 | 40,33 | 40,33 | 40,33 |
| | | | | | | | |

| **Pigmente a. (aus Tabelle 1)** | | | | | | | |
|---|---|---|---|---|---|---|---|
| Cyan 1 | 37,90 | 37,90 | | | | | |
| Magenta 2 | | | 25,38 | | | | |
| Gelb 3 | | | | 36,36 | | | |
| Schwarz 4 | | | | | | | |
| Weiss 5 | | | | | 42,45 | 42,45 | 42,45 |

| **Netz- und/oder Dispergiermittel c. (aus Tabelle 3)** | | | | | | | |
|---|---|---|---|---|---|---|---|
| Bykjet^{®} 9131 | 40,79 | 40,79 | 23,56 | 39,06 | | | |
| Disperbyk^{®} 2200 | | | | | 2,12 | 2,12 | 2,12 |

| **Lösemittel e. (aus Tabelle 2)** | | | | | | | |
|---|---|---|---|---|---|---|---|
| BuAc/BGA 1:2 | 16,58 | 16,58 | 14,06 | 20,05 | 6,61 | 6,61 | 6,61 |
| p-Xylol | | | | | 8,49 | 8,49 | 8,49 |

| **Formulierung^{x)}** | | | | | | | |
|---|---|---|---|---|---|---|---|
| Paste aus Komponente a.-d. | 4,39 | 1,58 | 2,36 | 1,65 | 0,71 | 0,71 | 0,71 |
| BuAc/BGA 1:2 | 1,69 | 5,52 | 5,29 | 5,50 | 2,79 | | 1,39 |

| **Isocyanatgruppen-haltige Verbindung b. (aus Tabelle 4)** | | | | | | | |
|---|---|---|---|---|---|---|---|
| Desmodur^{®} N3600 | 3,92 | 12,89 | 12,34 | 12,84 | 6,51 | | |
| Desmodur^{®} H | | | | | | 9,29 | |
| Desmodur^{®} N3400 | | | | | | | 7,90 |
| | | | | | | | |
| NCO/NCO reaktive-Gruppe | 5 | 44 | 51 | 43 | 4804 | 14628 | 5485 |
| Ausgangsviskosität [mPa*s] | 110,0 | 51,4 | 62,5 | 53,7 | 53,6 | 2,8 | 72,2 |
| rel. Änderung der Viskosität [%], nach a, b Tagen Lagerung bei 50 °C | Fest^{a)} | 46,3^{b)} | 58,2^{b)} | 53,8^{b)} | 22,0^{b)} | 6,1^{b)} | 27,6^{b)} |
| rel. Änderung des Z-Average [%] nach 14 Tagen Lagerung bei 50 °C | n.b.^{xx)} | -7,6 | -2,4 | -5,6 | -0,8 | 36,9 | -6,7 |
| Erfindungsgemäß | Nein | Ja | Ja | Ja | Ja | Ja | Ja |
| Stabil | Nein | Ja | Ja | Ja | Ja | Ja | Ja |

| | | | | | | | |
|---|---|---|---|---|---|---|---|
| ^{x)} Formulierungen 1-13 wurden aus den Pasten 1-13 hergestellt. ^{xx)} nicht bestimmbar (fest), a: nach 3, b: nach 14 Tagen | | | | | | | |

| Beispiel / Einwaage [g] | 7b | 8 | 9 | 10 | 11 | 12 |
|---|---|---|---|---|---|---|
| **Paste** | | | | | | |
| **Isocyanatgruppen-haltige Verbindung b. (aus Tabelle 4)** | | | | | | |
| Desmodur^{®} N3600 | 34,31 | 34,31 | 34,31 | 45,13 | 45,13 | 45,13 |
| | | | | | | |

| **Pigmente a. (aus Tabelle 1)** | | | | | | |
|---|---|---|---|---|---|---|
| Cyan 1 | | | | | | |
| Magenta 2 | | | | 25,52 | 25,52 | 25,52 |
| Gelb 3 | | | | | | |
| Schwarz 4 | 23,44 | 23,44 | 23,44 | | | |
| Weiss 5 | | | | | | |

| **Netz- und/oder Dispergiermittel c. (aus Tabelle 3)** | | | | | | |
|---|---|---|---|---|---|---|
| Bykjet^{®} 9131 | | | | | | |
| Disperbyk^{®} 2200 | 12,68 | 12,68 | 12,68 | 5,87 | 5,87 | 5,87 |
| **Lösemittel d. (aus Tabelle 2)** | | | | | | |
| BuAc/BGA 1:2 | | | | | | |
| p-Xylol | 29,57 | 29,57 | 29,57 | 23,48 | 23,48 | 23,48 |

| **Formulierung^{x)}** | | | | | | |
|---|---|---|---|---|---|---|
| Paste aus Komponente a.-d. | 1,13 | 1,13 | 1,13 | 1,17 | 1,17 | 1,17 |
| BuAc/BGA 1:2 | 2,66 | | 1,33 | 2,65 | | 1,32 |

| **Isocyanatgruppen-haltige Verbindung b. (aus Tabelle 4)** | | | | | | |
|---|---|---|---|---|---|---|
| Desmodur^{®} N3600 | 6,21 | | | 6,18 | | |
| Desmodur^{®} H | | 8,87 | | | 8,83 | |
| Desmodur^{®} N3400 | | | 7,54 | | | 7,51 |
| | | | | | | |
| NCO/NCO reaktive-Gruppe | 490 | 1486 | 558 | 1039 | 3133 | 1180 |
| | | | | | | |
| Ausgangsviskosität [mPa*s] | 73,7 | 4,4 | 100,5 | 60,4 | 3,6 | 82,9 |
| rel. Änderung der Viskosität [%], nach a, b Tagen Lagerung bei 50 °C | 52,0^{b)} | 1,0^{b)} | 37,0^{b)} | 36,0^{b)} | 9,0^{b)} | 42,0^{b)} |
| rel. Änderung des Z-Average [%] nach 14 Tagen Lagerung bei 50 °C | 3,0 | -8,1 | -1,2 | 6,6 | 5,2 | 23,0 |
| Erfindungsgemäß | Ja | Ja | Ja | Ja | Ja | Ja |
| Stabil | Ja | Ja | Ja | Ja | Ja | Ja |

| | | | | | | |
|---|---|---|---|---|---|---|
| ^{x)} Formulierungen 1-13 wurden aus den Pasten 1-13 hergestellt. ^{xx)} nicht bestimmbar (fest), a: nach 3, b: nach 14 Tagen | | | | | | |

Das Beispiel 1 wurde nach dreitägiger Lagerung bei 50 °C fest und eine Bestimmung der Viskosität war nicht mehr möglich. Beispiel 1 ist daher nicht erfindungsgemäß. Die Beispiele 2 bis 13 zeigen innerhalb von 14 Tagen einen Viskositätsanstieg von weniger als 500 % und sind damit erfindungsgemäß.

## Patentansprüche

1. Eine lagerstabile Isocyanatgruppen-haltige Formulierung, beinhaltend die Komponenten:
a. 0,01 bis 45 Gew.-% mindestens eines Pigments,
b. 1 bis 98 Gew.-% mindestens einer Isocyanatgruppen-haltigen Komponente, die freie Isocyanatgruppen aufweist,
c. 0,01 bis 20 Gew.-% mindestens eines Netzmittels und/oder Dispergiermittels,
d. 0,1 bis 35 Gew.-% mindestens eines Isocyanatgruppen-haltigen Anreibeharzes enthaltend freie Isocyanatgruppen, und
e. 0 bis 80 Gew.-% Lösemittel,
jeweils bezogen auf die Gesamtmenge der Formulierung, wobei die Summe aller Bestandteile der Formulierung 100 Gew.-% nicht übersteigt,
**dadurch gekennzeichnet, dass** die Formulierung nach Lagerung bei 50 °C über einen Zeitraum von mindestens 3 Tagen einen Viskositätsanstieg von weniger als 500 % aufweist, bezogen auf die Ausgangs-Viskosität der Formulierung, die nach 1 Stunde nach Zusammenfügen sämtlicher gewünschter Komponenten, insbesondere der Komponenten a. bis e., ermittelt wird, wobei die Viskositätsbestimmung jeweils bei 20 °C bei einer Scherrate von 500 [l/s] vorgenommen wird, wobei das molare Verhältnis der Summe aller Isocyanatgruppen der Isocyanat-haltigen Formulierung zu der Summe aller isocyanatreaktiven Gruppen, die nicht Isocyanatgruppen sind, in der Formulierung mindestens 8:1 beträgt
und wobei das Isocyanatgruppen-haltige Anreibeharz d. eine Viskosität in einem Bereich von 100 bis 5 000 mPas aufweist
und wobei das Isocyanatgruppen-haltige Anreibeharz d. ausgewählt ist aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI), 2,4- und 2,6-Diisocyanatotoluol (TDI), 2,4'- und 4,4'-Diisocyanatodiphenylmethan (MDI) und 1,5-Diisocyanatonaphthalin, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), oder einer Mischung aus mindestens zwei hiervon sowie gegebenenfalls Oligomere und/oder Reaktionsprodukte hiervon.

2. Die Formulierung gemäß Anspruch 1, wobei die Isocyanatgruppen-haltige Komponente b. ausgewählt ist aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan, 1,3- und 1,4-Bis-(isocyanatomethyl)benzol (Xyxlylendiisocyanat; XDI), 1,3- und 1,4-Bis(l-isocyanato-1-methyl-ethyl)-benzol (TMXDI), 2,4- und 2,6-Diisocyanatotoluol (TDI), 2,4'- und 4,4'-Diisocyanatodiphenylmethan (MDI) und 1,5-Diisocyanatonaphthalin, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), oder einer Mischung aus mindestens zwei hiervon, sowie gegebenenfalls Oligomere und Reaktionsprodukte hiervon.

3. Die Formulierung gemäß einem der vorhergehenden Ansprüche, wobei die Isocyanatgruppen-haltige Komponente b. und das Isocyanatgruppen-haltige Anreibeharz d. aus aliphatischen oder cycloaliphatischen Isocyanaten oder Mischungen hieraus besteht.

4. Formulierung gemäß einem der vorhergehenden Ansprüche, wobei die Formulierung mindestens eine der folgenden Eigenschaften bei Raumtemperatur aufweist:
(A) eine Ausgangs-Viskosität in einem Bereich von 1 bis 200 mPas;
(B) eine Ausgangs-Viskosität in einem Bereich von 30 bis 1000 mPas;
(C) eine Ausgangs-Viskosität in einem Bereich von 50 bis 2000 mPas;
(D) eine Ausgangs-Viskosität in einem Bereich von 1000 bis 100000 mPas;
(E) einen Gehalt an Isocyanatgruppen kleiner als 60 Gew.-%, und größer als 3%, bezogen auf die Gesamtmenge der Formulierung,
wobei die Formulierung eine der Eigenschaften ausgewählt aus (A) bis (D) in Kombination mit der Eigenschaft (E) aufweist.

5. Eine Formulierung gemäß einem der vorhergehenden Ansprüche, wobei die Formulierung einen Anstieg der Teilchengröße bei Lagerung bei 50 °C und Normaldruck über einen Zeitraum von 3 Tagen von weniger als 500 %, bezogen auf die ursprüngliche Teilchengröße der Formulierung, bezogen auf das intensitätsgewichtete harmonische Mittel des hydrodynamischen Durchmessers (Z-Average) gemessen mittels dynamischer Lichtstreuung, aufweist.

6. Verwendung der Formulierung gemäß einem der Ansprüche 1 bis 5 zur Beschichtung von Substrat-Oberflächen zum Erhalt von beschichteten Objekten.

7. Ein beschichtetes Objekt erhältlich gemäß Anspruch 6.

8. Das Objekt gemäß einem der Ansprüche 6 oder 7, wobei das Material des Objekte ausgewählt ist aus der Gruppe bestehend aus Textil, Holz, Plastik, Glas, Keramik, Carbon, Metall oder einer Kombination aus mindestens zwei hiervon.

9. Verwendung der Formulierung gemäß einem der Ansprüche 1 bis 5 als Tinte.

10. Verwendung eines Polyisocyanats als Anreibeharz d. für lagerstabile Isocyanatgruppen-haltige Formulierungen gemäß einem der Ansprüche 1 bis 5.

## Claims

1. Storage-stable, isocyanate group-containing formulation comprising the components:
a. 0.01% to 45% by weight of at least one pigment,
b. 1% to 98% by weight of at least one isocyanate group-containing component comprising free isocyanate groups,
c. 0.01% to 20% by weight of at least one wetting agent and/or dispersant,
d. 0.1% to 35% by weight of at least one isocyanate group-containing grinding resin containing free isocyanate groups and
e. 0% to 80% by weight of solvent,
in each case based on the total amount of the formulation, wherein the sum of all constituents of the formulation does not exceed 100% by weight,
**characterized in that** the formulation exhibits a viscosity increase of less than 500% after storage at 50°C over a period of at least 3 days based on the starting viscosity of the formulation which is determined 1 hour after combination of all desired components, especially components a. to e., wherein the viscosity determination is in each case undertaken at 20°C at a shear rate of 500 [l/s], wherein the molar ratio of the sum of all isocyanate groups of the isocyanate-containing formulation to the sum of all isocyanate-reactive groups distinct from isocyanate groups in the formulation is at least 8:1
and wherein the isocyanate group-containing grinding resin d. has a viscosity in a range from 100 to 5000 mPas and wherein the isocyanate group-containing grinding resin d. is selected from the group consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- and 2,4,4-trimethyl-1,6-diisocyanatohexane and 1,10-diisocyanatodecane, 1,3- and 1,4-bis(isocyanatomethyl)benzene (xylylene diisocyanate; XDI), 1,3- and 1,4-bis(1-isocyanato-1-methylethyl) benzene (TMXDI), 2,4- and 2,6-diisocyanatotoluene (TDI), 2,4'- and 4,4'-diisocyanatodiphenylmethane (MDI) and 1,5-diisocyanatonaphthalene, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI) or a mixture of at least two of these and optionally oligomers and/or reaction products thereof.

2. Formulation according to Claim 1, wherein the isocyanate group-containing component b. is selected from the group consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- and 2,4,4-trimethyl-1,6-diisocyanatohexane and 1,10-diisocyanatodecane, 1,3- and 1,4-bis(isocyanatomethyl)benzene (xylylene diisocyanate; XDI), 1,3- and 1,4-bis(1-isocyanato-1-methylethyl) benzene (TMXDI), 2,4- and 2,6-diisocyanatotoluene (TDI), 2,4'- and 4,4'-diisocyanatodiphenylmethane (MDI) and 1,5-diisocyanatonaphthalene, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI) or a mixture of at least two of these and optionally oligomers and/or reaction products thereof.

3. Formulation according to any of the preceding claims, wherein the isocyanate group-containing component b. and the isocyanate group-containing grinding resin d. consists of aliphatic or cycloaliphatic isocyanates or mixtures thereof.

4. Formulation according to any of the preceding claims, wherein the formulation has at least one of the following properties at room temperature:
(A) a starting viscosity in a range from 1 to 200 mPas;
(B) a starting viscosity in a range from 30 to 1000 mPas;
(C) a starting viscosity in a range from 50 to 2000 mPas;
(D) a starting viscosity in a range from 1000 to 100 000 mPas;
(E) a content of isocyanate groups of less than 60% by weight and more than 3% based on the total amount of the formulation,
wherein the formulation has any of the properties selected from (A) to (D) in combination with property (E).

5. Formulation according to any of the preceding claims, wherein the formulation exhibits an increase in particle size upon storage at 50°C and standard pressure over a period of 3 days of less than 500% based on the original particle size of the formulation based on the intensity-weighted harmonic mean of the hydrodynamic diameter (Z-average) measured by dynamic light scattering.

6. Use of the formulation according to any of Claims 1 to 5 for coating substrate surfaces to obtain coated objects.

7. Coated object obtainable according to Claim 6.

8. Object according to either of Claims 6 and 7, wherein the material of the object is selected from the group consisting of textile, wood, plastic, glass, ceramic, carbon, metal or a combination of at least two of these.

9. Use of the formulation according to any of Claims 1 to 5 as ink.

10. Use of a polyisocyanate as grinding resin d. for storage-stable isocyanate group-containing formulations according to any of Claims 1 to 5.

## Revendications

1. Formulation stable au stockage, contenant des groupes isocyanate, comportant les composants :
a. 0,01 à 45 % en poids d'au moins un pigment,
b. 1 à 98 % en poids d'au moins un composant contenant des groupes isocyanate, qui présente des groupes isocyanate libres,
c. 0,01 à 20 % en poids d'au moins agent mouillant et/ou dispersant,
d. 0,1 à 35 % en poids d'au moins une résine de broyage contenant des groupes isocyanate, contenant des groupes isocyanate libres et
e. 0 à 80 % en poids de solvant,
à chaque fois par rapport à la quantité totale de la formulation, la somme de tous les constituants de la formulation ne dépassant pas 100 % en poids,
**caractérisée en ce que** la formulation présente, après entreposage à 50 °C sur une période d'au moins 3 jours, une augmentation de viscosité inférieure à 500 %, par rapport à la viscosité de départ de la formulation, qui est déterminée après 1 heure après la réunion de tous les composants souhaités, en particulier des composants a. à e., la détermination de la viscosité étant réalisée à chaque fois à 20 °C à une vitesse de cisaillement de 500 [l/s], le rapport molaire de la somme de tous les groupes isocyanate de la formulation contenant isocyanate à la somme de tous les groupes réactifs vis-à-vis d'isocyanate, qui ne sont pas des groupes isocyanate, dans la formulation valant au moins 8:1
et la résine de broyage d. contenant des groupes isocyanate présentant une viscosité dans la plage de 100 à 5000 mPa.s
et la résine de broyage d. contenant des groupes isocyanate étant choisie dans le groupe constitué par le 1,4-diisocyanatobutane (BDI), le 1,5-diisocyanatopentane (PDI), le 1,6-diisocyanatohexane (HDI), le 2-méthyl-1,5-diisocyanatopentane, le 1,5-diisocyanato-2,2-diméthylpentane, le 2,2,4-triméthyl-1,6-diisocyanatohexane ou, selon le cas, le 2,4,4-triméthyl-1,6-diisocyanatohexane et le 1,10-diisocyanatodécane, le 1,3-bis-(isocyanatométhyl)benzène et le 1,4-bis-(isocyanatométhyl)benzène (diisocyanate de xylylène ; XDI), le 1,3-bis(1-isocyanato-1-méthyléthyl)-benzène et le 1,4-bis(1-isocyanato-1-méthyléthyl)-benzène (TMXDI), le 2,4-diisocyanatotoluène et le 2,6-diisocyanatotoluène (TDI), le 2,4'-diisocyanatodiphénylméthane et le 4,4'-diisocyanatodiphénylméthane (MDI) et le 1,5-diisocyanatonaphtalène, le 1-isocyanato-3,3,5-triméthyl-5-isocyanatométhyl-cyclohexane (diisocyanate d'isophorone ; IPDI), le 1-isocyanato-1-méthyl-4(3)-isocyanatométhylcyclohexane, le 2,4'-diisocyanatodicyclohexylméthane et le 4,4'-diisocyanatodicyclohexylméthane (H12MDI) ou un mélange d'au moins deux de ceux-ci ainsi que le cas échéant les oligomères et/ou les produits de réaction de ceux-ci.

2. Formulation selon la revendication 1, le composant b. contenant des groupes isocyanate étant choisi dans le groupe constitué par le 1,4-diisocyanatobutane (BDI), le 1,5-diisocyanatopentane (PDI), le 1,6-diisocyanatohexane (HDI), le 2-méthyl-1,5-diisocyanatopentane, le 1,5-diisocyanato-2,2-diméthylpentane, le 2,2,4-triméthyl-1,6-diisocyanatohexane ou, selon le cas, le 2,4,4-triméthyl-1,6-diisocyanatohexane et le 1,10-diisocyanatodécane, le 1,3-bis-(isocyanatométhyl)benzène et le 1,4-bis-(isocyanatométhyl)benzène (diisocyanate de xylylène ; XDI), le 1,3-bis(1-isocyanato-1-méthyléthyl)-benzène et le 1,4-bis(1-isocyanato-1-méthyléthyl)-benzène (TMXDI), le 2,4-diisocyanatotoluène et le 2,6-diisocyanatotoluène (TDI), le 2,4'-diisocyanatodiphénylméthane et le 4,4'-diisocyanatodiphénylméthane (MDI) et le 1,5-diisocyanatonaphtalène, le 1-isocyanato-3,3,5-triméthyl-5-isocyanatométhyl-cyclohexane (diisocyanate d'isophorone ; IPDI), le 1-isocyanato-1-méthyl-4(3)-isocyanatométhylcyclohexane, le 2,4'-diisocyanatodicyclohexylméthane et le 4,4'-diisocyanatodicyclohexylméthane (H12MDI) ou un mélange d'au moins deux de ceux-ci ainsi que le cas échéant les oligomères et les produits de réaction de ceux-ci.

3. Formulation selon l'une des revendications précédentes, le composant b. contenant des groupes isocyanate et la résine de broyage d. contenant des groupes isocyanate étant constitué(e) par des isocyanates aliphatiques ou cycloaliphatiques ou leurs mélanges.

4. Formulation selon l'une des revendications précédentes, la formulation présentant au moins l'une des propriétés suivantes à température ambiante :
(A) une viscosité de départ dans une plage de 1 à 200 mPa.s ;
(B) une viscosité de départ dans une plage de 30 à 1000 mPa.s ;
(C) une viscosité de départ dans une plage de 50 à 2000 mPa.s ;
(D) une viscosité de départ dans une plage de 1000 à 100.000 mPa.s ;
(E) une teneur en groupes isocyanate inférieure à 60 % en poids et supérieure à 3 %, par rapport à la quantité totale de la formulation,
la formulation présentant l'une des propriétés choisies parmi (A) à (D) en combinaison avec la propriété (E).

5. Formulation selon l'une des revendications précédentes, la formulation présentant une augmentation de la grosseur de particules lors d'un entreposage à 50 °C et à la pression normale sur une période de 3 jours inférieure à 500 %, par rapport à la grosseur de particule initiale de la formulation, par rapport à la moyenne harmonique pondérée en intensité du diamètre hydrodynamique (moyenne Z), mesurée par diffusion dynamique de la lumière.

6. Utilisation de la formulation selon l'une des revendications 1 à 5 pour le revêtement de surfaces de substrat pour l'obtention d'objets revêtus.

7. Objet revêtu pouvant être obtenu selon la revendication 6.

8. Objet selon l'une des revendications 6 ou 7, le matériau de l'objet étant choisi dans le groupe constitué par le textile, le bois, le plastique, le verre, la céramique, le carbone, le métal ou une combinaison d'au moins deux matériaux parmi ceux-ci.

9. Utilisation de la formulation selon l'une des revendications 1 à 5 comme encre.

10. Utilisation d'un polyisocyanate comme résine de broyage d. pour des formulations stables au stockage contenant des groupes isocyanate selon l'une des revendications 1 à 5.
